(19) Europäisches Patentamt
European Patent Office
Office européen des brevets

(11) EP 4 797 348 A1

(12) EUROPEAN PATENT APPLICATION
published in accordance with Art. 153(4) EPC

(43) Date of publication:
**26.08.2026 Bulletin 2026/35**

(21) Application number: **24878838.2**

(22) Date of filing: **29.09.2024**

(51) International Patent Classification (IPC):
***H01M 4/36*** *(2006.01)* ***H01M 4/38*** *(2006.01)*
***H01M 4/587*** *(2010.01)* ***H01M 4/04*** *(2006.01)*
***H01M 4/134*** *(2010.01)* ***H01M 4/133*** *(2010.01)*
***H01M 10/0525*** *(2010.01)*

(52) Cooperative Patent Classification (CPC):
Y02E 60/10

(86) International application number:
**PCT/CN2024/122343**

(87) International publication number:
**WO 2025/082193 (24.04.2025 Gazette 2025/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.10.2023 CN 202311352607**

(71) Applicant: **Ningde Amperex Technology Limited**
**352100 Ningde (CN)**

(72) Inventor: **HU, Guangwu**
**Ningde, Fujian 352100 (CN)**

(74) Representative: **Kraus & Lederer PartGmbB**
**Thomas-Wimmer-Ring 15**
**80539 München (DE)**

# (54) SILICON-CARBON COMPOSITE MATERIAL, NEGATIVE ELECTRODE SHEET, ELECTROCHEMICAL APPARATUS, AND ELECTRONIC APPARATUS

(57) This application pertains to the field of electrochemical technology and relates to a silicon-carbon composite material, a negative electrode sheet, an electrochemical apparatus, and an electronic apparatus. The silicon-carbon composite material includes elemental silicon and a carbon material. A Raman spectrum of the silicon-carbon composite material satisfies: $0.61 < R/R' < 0.78$, where R is a ratio of $I_A$ to $I_B$, and R' is a ratio of $I_D$ to $I_G$. $I_A$ represents an intensity of a peak at $521\pm5$ $cm^{-1}$ in the Raman spectrum of the silicon-carbon composite material; $I_B$ represents an intensity of a peak at $480\pm5$ $cm^{-1}$ in the Raman spectrum of the silicon-carbon composite material; $I_D$ represents an intensity of a peak at $1360\pm5$ $cm^{-1}$ in the Raman spectrum of the silicon-carbon composite material; and $I_G$ represents an intensity of a peak at $1580\pm5$ $cm^{-1}$ in the Raman spectrum of the silicon-carbon composite material. Using the silicon-carbon composite material having the above characteristics as a negative electrode material of a secondary battery enables the secondary battery to exhibit significantly improved electrical conductivity, low-temperature performance, cycling performance, and swelling resistance while maintaining a high specific capacity.

3.0
2.5
2.0
1.5
1.0
0.5
0.0
Voltage (V)
0
500
1000
1500
2000
Specific capacity (mAh/g)

FIG. 4

EP 4 797 348 A1

## Description

## TECHNICAL FIELD

This application pertains to the field of electrochemical technology and relates to a silicon-carbon composite material, a negative electrode sheet, an electrochemical apparatus, and an electronic apparatus.

## BACKGROUND

Electrochemical apparatuses, such as lithium-ion batteries, are widely used in various aspects of modern life due to advantages such as no memory effect, small size, light weight, and environmental friendliness. In recent years, electrochemical apparatuses have experienced rapid development in the fields of new energy vehicles and large-scale energy storage. However, in negative electrode materials of conventional commercial electrochemical apparatuses, taking lithium-ion batteries as an example, carbonbased materials such as graphite have low capacity, resulting in low energy density of lithium-ion batteries. Silicon-based materials are prone to swelling, which leads to poor cycling performance of lithium-ion batteries. This severely limits their large-scale application in electrochemical apparatuses.

Although carbon materials as negative electrode materials have low specific capacity, they can serve as a good conductive medium and buffer substrate for silicon-based materials due to advantages such as low cost, good electrical conductivity, and excellent chemical and thermal stability. Therefore, combining silicon oxide and carbon to prepare a silicon-carbon composite negative electrode material is an effective approach. For example, Yang et al. prepared a uniform silicon nanoparticle@phenolic resin-based carbon composite material with adjustable carbon layer thickness through a simple, scalable production method. Son et al. used silane gas as a silicon source and adopted CVD to uniformly deposit a nanosilicon layer on the surface of a carbon material, producing a low-swelling silicon-carbon composite material.

Although there are numerous studies on silicon-carbon composite materials, there is limited research exploring the intrinsic relationships between the material characteristics and their cycling performance and swelling resistance.

## SUMMARY

This application is intended to provide a silicon-carbon composite material, a negative electrode sheet, an electrochemical apparatus, and an electronic apparatus. Using the silicon-carbon composite material of this application as a negative electrode material of a secondary battery enables the secondary battery to exhibit significantly improved electrical conductivity, low-temperature performance, cycling performance, and swelling resistance while maintaining a high specific capacity.

According to a first aspect of this application, this application provides a silicon-carbon composite material. The silicon-carbon composite material includes elemental silicon and a carbon material, where a Raman spectrum of the silicon-carbon composite material satisfies: $0.61 < R/R' < 0.78$; where R is a ratio of $I_A$ to $I_B$; R' is a ratio of $I_D$ to $I_G$; $I_A$ represents an intensity of a peak at $521\pm5$ $cm^{-1}$ in the Raman spectrum of the silicon-carbon composite material; $I_B$ represents an intensity of a peak at $480\pm5$ $cm^{-1}$ in the Raman spectrum of the silicon-carbon composite material; $I_D$ represents an intensity of a peak at $1360\pm5$ $cm^{-1}$ in the Raman spectrum of the silicon-carbon composite material; and $I_G$ represents an intensity of a peak at $1580\pm5$ $cm^{-1}$ in the Raman spectrum of the silicon-carbon composite material.

In some embodiments of this application, when an R/R' value of the silicon-carbon composite material ranges from 0.61 to 0.78, the secondary battery exhibits improved electrical conductivity, low-temperature performance, cycling performance, and swelling resistance while maintaining a high specific capacity. In other words, when the silicon-carbon composite material of this application satisfies the above characteristics, the secondary battery exhibits significantly improved electrical conductivity, low-temperature performance, cycling performance, and swelling resistance while maintaining a high specific capacity.

In some embodiments of this application, a range of R in the Raman spectrum characteristic of the silicon-carbon composite material is: $0.78 \leq R \leq 0.9$; and a range of R' in the Raman spectrum characteristic of the silicon-carbon composite material is: $1.2 \leq R' \leq 1.25$.

In some embodiments of this application, when an R value of the silicon-carbon composite material of this application falls within the above range, the secondary battery exhibits significantly improved cycling performance and swelling resistance while maintaining a high specific capacity. Additionally, when an R' value of the silicon-carbon composite material falls within the above range, the secondary battery exhibits improved cycling performance while maintaining good electrical conductivity and low-temperature performance. In other words, when both the R value and the R' value in the Raman spectrum characteristic of the silicon-carbon composite material of this application satisfy the above range characteristics, the secondary battery exhibits significantly improved electrical conductivity, low-temperature performance, cycling performance, and swelling resistance while maintaining a high specific capacity.

In some embodiments of this application, the elemental silicon includes at least one of silicon nanoparticles, silicon submicron particles, or a silicon nanofilm. In some embodiments of this application, the carbon material includes a porous carbon framework and a carbon coating layer. According to the silicon-carbon composite material of this application, the elemental silicon in the silicon-carbon composite material endows the silicon-carbon composite material with high specific capacity, and the carbon material in the silicon-carbon composite material not only buffers the volume swelling of silicon to some extent but also enhances the electrical conductivity of the silicon-carbon composite material.

In some embodiments of this application, based on a mass of the silicon-carbon composite material, a ratio of a content a of carbon element to a content b of silicon element in the silicon-carbon composite material satisfies the range: $0.5 < a/b < 10$; and/or a content a of carbon element in the silicon-carbon composite material satisfies the range: 40wt% < a < 90wt%, and a content b of silicon element in the silicon-carbon composite material satisfies the range: 10wt% < b < 60wt%. In some embodiments of this application, based on the mass of the silicon-carbon composite material, the ratio of the content a of the carbon element to the content b of the silicon element in the silicon-carbon composite material satisfies the range: $1.07 < a/b < 2.03$; and/or the content a of the carbon element in the silicon-carbon composite material satisfies the range: 50wt% < a < 64.8wt%; and the content b of the silicon element in the silicon-carbon composite material satisfies the range: 31.9wt% < b < 46.6wt%. In some embodiments of this application, based on the mass of the silicon-carbon composite material, the ratio of the content a of the carbon element to the content b of the silicon element in the silicon-carbon composite material satisfies the range: $1.1 < a/b < 2.02$, and the content a of the carbon element in the silicon-carbon composite material satisfies the range: 52wt% < a < 64wt%, and the content b of the silicon element in the silicon-carbon composite material satisfies the range: 32wt% < b < 44wt%.

In the technical solution of this application, controlling the ratio of a to b and the values of a and b within the above ranges enables the silicon-carbon composite material to have a high specific capacity, buffers the volume swelling of the silicon-carbon composite material to some extent, and enhances the electrical conductivity of the silicon-carbon composite material.

In some embodiments of this application, in an SEM image of an internal cross-section of the silicon-carbon composite material, internal surfaces of particles are smooth, and pores inside the particles have a pore size of less than 50 nm. Observation of an SEM image of a cross-section of the silicon-carbon composite material of this application in backscattered mode reveals that the interior of the particles is smooth and flat, featuring an internal structure with pores of small pore size, without macropore structures, and some silicon-rich regions are present on the outer surface of the particles. The smooth and flat internal structure with pores of small pore size enhances the deposition uniformity inside the particles of the silicon-carbon composite material and prevents the presence of large pores that could otherwise lead to low capacity due to the absence of silicon deposition inside the silicon-carbon composite material. Additionally, certain silicon-rich regions on the outer surface of the particles enable the silicon-carbon composite material to have a high specific capacity and initial Coulombic efficiency.

In some embodiments of this application, the silicon-carbon composite material satisfies at least one of the following conditions 1) to 5):

1) a size of silicon microcrystals in the silicon-carbon composite material is less than 1 nm; in some embodiments, the size of the silicon microcrystals in the silicon-carbon composite material ranges from 0.8 nm to 0.95 nm;
2) a particle size $D_v50$ of the silicon-carbon composite material ranges from 5 μm to 10 μm, and $D_v99$ ranges from 15 μm to 25 μm; in some embodiments, the particle size $D_v50$ ranges from 5 μm to 6.5 μm, and $D_v99$ ranges from 15 μm to 19 μm;
3) a specific surface area of the silicon-carbon composite material ranges from 1 $m^2/g$ to 50 $m^2/g$; in some embodiments, the specific surface area of the silicon-carbon composite material ranges from 4 $m^2/g$ to 8 $m^2/g$;
4) a content of oxygen element in the silicon-carbon composite material ranges from 1.5wt% to 4.0wt%; in some embodiments, the content of the oxygen element in the silicon-carbon composite material ranges from 1.2wt% to 3wt%; or
5) a first-cycle delithiation specific capacity of the silicon-carbon composite material ranges from 500 mAh/g to 2500 mAh/g; in some embodiments, the first-cycle delithiation specific capacity of the silicon-carbon composite material ranges from 1400 mAh/g to 2000 mAh/g.

Controlling the size of the silicon microcrystals in the silicon-carbon composite material within the above range can improve the lithium intercalation and deintercalation activity of the silicon microcrystals, and accelerate the transport of active ions. Additionally, the relatively small size of the silicon microcrystals can buffer deformation stress during charging and discharging, thereby improving the cycling performance and swelling resistance of the silicon-carbon composite material. Controlling the particle size $D_v50$ and $D_v99$ of the silicon-carbon composite material within the above ranges can improve the dispersion uniformity of the slurry, and enhance the transport of active ions, thereby facilitating the improvement of the cycling performance and swelling resistance of the secondary battery. Controlling the specific surface area of the silicon-carbon composite material within the above range can reduce side reactions between the silicon-carbon

composite material and the electrolyte, which is beneficial to improving the cycling performance and swelling resistance of the secondary battery. Controlling the content of the oxygen element in the silicon-carbon composite material within the above range facilitates further balance between the specific capacity, cycling performance, and swelling resistance of the lithium-ion battery, thereby enhancing the overall performance of the lithium-ion battery. When the first-cycle delithiation specific capacity of the silicon-carbon composite material is within the above range, good gram capacity performance, cycling performance, and swelling resistance of the silicon-carbon composite material can be achieved.

According to a second aspect of this application, this application further provides a method for preparing the silicon-carbon composite material. The method includes: adjusting an R value of the silicon-carbon composite material by changing at least one parameter selected from a pyrolysis temperature of a silicon-containing gas, a flow rate of the silicon-containing gas, a duration of introducing the silicon-containing gas, a duration of a micro-oxidation, a temperature of the micro-oxidation, or a flow rate of an introduced oxygen; and/or adjusting an R' value of the silicon-carbon composite material by changing at least one parameter selected from a pyrolysis temperature of a carbon source gas, a flow rate of the carbon source gas, or a duration of introducing the carbon source gas.

In some embodiments of this application, the method includes the following steps:

(1) silicon deposition: using a porous carbon material as a precursor and a silicon-containing gas as a silicon source, absorbing and depositing elemental nanosilicon onto pores of the porous carbon material through a chemical vapor deposition;
(2) micro-oxidation: introducing oxygen to perform a micro-oxidation on nanosilicon on a shallow surface and an outer surface of the porous carbon material; and
(3) carbon deposition: after the micro-oxidation is completed, introducing a carbon source gas to deposit the carbon source gas on an outer surface of the material obtained in step (2) to form a carbon coating layer, thereby obtaining a silicon-carbon material coated with the carbon coating layer;

where steps (1) to (3) are all performed under a protective atmosphere of inert gas and a gas phase condition of a slight positive pressure, the slight positive pressure condition ranging from 0.1 kPa to 5 kPa.

In some embodiments of this application, the method further includes:
(4) grinding and sieving the silicon-carbon composite material obtained in step (3) to obtain the silicon-carbon composite material.

In some embodiments of this application, in step (1), the slight positive pressure condition ranges from 1.5 kPa to 2.5 kPa; in step (2), the slight positive pressure condition ranges from 0.5 kPa to 1.5 kPa; and in step (3), the slight positive pressure condition ranges from 2.0 kPa to 3.0 kPa.

In some embodiments of this application, the inert gas is argon.

In some embodiments of this application, the silicon-containing gas includes, but is not limited to, at least one of monosilane, disilane, trisilane, tetrasilane, chlorosilane, dichlorosilane, trichlorosilane, or tetrachlorosilane; the carbon source gas includes, but is not limited to, at least one of methane, acetylene, ethylene, ethane, propyne, propylene, propane, butyne, butene, or butane; and the porous carbon material includes, but is not limited to, at least one of activated carbon, expanded graphite, carbon molecular sieve, carbon nanofibers, or carbon nanotubes. In some embodiments, the activated carbon is obtained by activation of biochar, resin carbon, coke, or the like.

In some embodiments of this application, a specific surface area of the porous carbon material ranges from 1000 $m^2/g$ to 2500 $m^2/g$; a pore volume of the porous carbon material ranges from 0.5 $cm^3/g$ to 1.5 $cm^3/g$; and the porous carbon material contains 0% to 30% ultramicropores, 0% to 30% submicropores, 0% to 60% large micropores, and 0% to 20% meso-macropores.

According to a third aspect of this application, this application provides a negative electrode sheet, where the negative electrode sheet includes a negative electrode current collector and a negative electrode active substance disposed on at least one surface of the negative electrode current collector; and the negative electrode active substance includes the silicon-carbon composite material according to the first aspect of this application.

In some embodiments of this application, the negative electrode active substance further includes graphite, a conductive agent, and a binder; and a mass proportion of the graphite in the negative electrode active substance ranges from 35wt% to 95wt%.

In some embodiments of this application, the negative electrode active substance satisfies at least one of the following conditions (I) to (III):

(I) a particle size $D_v50$ ranges from 5 $\mu m$ to 15 $\mu m$, and $D_v99$ ranges from 15 $\mu m$ to 40 $\mu m$;
(II) a specific surface area of the negative electrode active substance ranges from 1 $m^2/g$ to 10 $m^2/g$; or
(III) a first-cycle delithiation specific capacity of the negative electrode active substance ranges from 400 mAh/g to 1000 mAh/g.

According to a fourth aspect of this application, this application provides an electrochemical apparatus, where the electrochemical apparatus includes the negative electrode sheet according to the third aspect of this application.

According to a fifth aspect of this application, this application provides an electronic apparatus, where the electronic apparatus includes the electrochemical apparatus according to the fourth aspect of this application.

Compared with the prior art, this application has the following beneficial effects:

This application provides a silicon-carbon composite material, a negative electrode sheet containing the silicon-carbon composite material, an electrochemical apparatus, and an electronic apparatus. The silicon-carbon composite material in the embodiments of this application, when the ratio R/R' of the silicon-carbon composite material is controlled to satisfy 0.61 < R/R' < 0.78, where R is a ratio of $I_A$ to $I_B$ and R' is a ratio of $I_D$ to $I_G$, the silicon-carbon composite material can achieve an optimal balance between crystalline silicon and amorphous silicon and between carbon defects and carbon graphitization. This enables a secondary battery to exhibit significantly improved electrical conductivity, low-temperature performance, cycling performance, and swelling resistance while maintaining a high specific capacity.

## BRIEF DESCRIPTION OF DRAWINGS

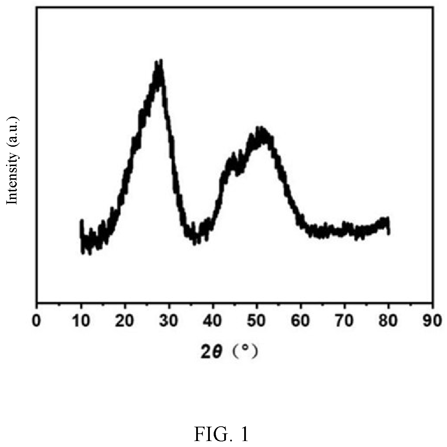

FIG. 1 is an XRD pattern of a silicon-carbon composite material obtained in Example 1, where the XRD pattern indicates that elemental silicon in the silicon-carbon composite material obtained in the example of this application exists in an amorphous form;
FIG. 2 shows a Raman spectrum of a silicon-carbon composite material obtained in Example 1;
FIG. 3 is an SEM image of a cross-section of a silicon-carbon composite material obtained in Example 1 in backscattered mode; and

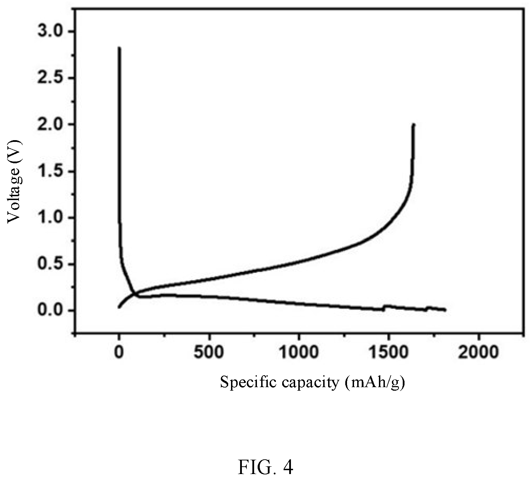

FIG. 4 shows a first-cycle charge-discharge curve of a silicon-carbon composite material obtained in Example 1.

## DETAILED DESCRIPTION

The technical solutions of this application are further described below through specific embodiments. The specific embodiments do not limit the protection scope of this application. Non-essential modifications and adjustments made by others based on the concepts of this application still fall within the protection scope of this application.

It should be noted that in the following description, a lithium-ion battery is used as an example of a secondary battery to illustrate this application, but the secondary battery of this application is not limited to a lithium-ion battery.

According to a first aspect of this application, this application provides a silicon-carbon composite material. The silicon-carbon composite material includes elemental silicon and a carbon material, where a Raman spectrum of the silicon-carbon composite material satisfies: 0.61 < R/R' < 0.78; where R is a ratio of $I_A$ to $I_B$; R' is a ratio of $I_D$ to $I_G$; $I_A$ represents an intensity of a peak at 521±5 $cm^{-1}$ in the Raman spectrum of the silicon-carbon composite material; $I_B$ represents an intensity of a peak at 480±5 $cm^{-1}$ in the Raman spectrum of the silicon-carbon composite material; $I_D$ represents an intensity of a peak at 1360±5 $cm^{-1}$ in the Raman spectrum of the silicon-carbon composite material; and $I_G$ represents an intensity of a peak at 1580±5 $cm^{-1}$ in the Raman spectrum of the silicon-carbon composite material.

In this application, $I_A$ represents an intensity of a characteristic peak of crystalline silicon at 521±5 $cm^{-1}$ in the Raman spectrum. A silicon-silicon bond has a symmetric structure, which produces strong Raman scattering. Crystalline silicon has highly consistent bond angles and bond lengths with ordered arrangement, forming a sharp Raman peak, with a characteristic strong scattering band located at 521±5 $cm^{-1}$. $I_B$ represents an intensity of a characteristic peak of amorphous silicon at 480±5 $cm^{-1}$ in the Raman spectrum. The structure of amorphous silicon is relatively disordered, with large variations in bond angles, bond energies, bond lengths, and swing ranges, forming a broader Raman peak at 480±5 $cm^{-1}$, which is distinctly different from the characteristic peak of crystalline silicon. An intensity ratio of peaks at 521 ±5 $cm^{-1}$ and 480±5 $cm^{-1}$ in the Raman spectrum, namely the ratio R of $I_A$ to $I_B$, can represent the content ratio of two silicon forms, crystalline silicon and amorphous silicon, in the silicon-carbon composite material of this application.

In this application, $I_A$ represents an intensity of a characteristic peak at 521±5 $cm^{-1}$ in the Raman spectrum of the silicon-carbon composite material. In some embodiments, $I_A$ represents an intensity of a corresponding characteristic peak between 516 $cm^{-1}$ and 527 $cm^{-1}$ in the Raman spectrum of the silicon-carbon composite material. In some embodiments, $I_A$ represents an intensity of a characteristic peak at any wavelength of 516 $cm^{-1}$, 517 $cm^{-1}$, 518 $cm^{-1}$, 519 $cm^{-1}$, 520 $cm^{-1}$, 521 $cm^{-1}$, 522 $cm^{-1}$, 523 $cm^{-1}$, 524 $cm^{-1}$, 525 $cm^{-1}$, 526 $cm^{-1}$, or 527 $cm^{-1}$ in the Raman spectrum of the silicon-carbon composite material, or an intensity of a corresponding characteristic peak within a range defined by any two of these wavelength values.

In this application, $I_B$ represents an intensity of a peak at 480±5 $cm^{-1}$ in the Raman spectrum of the silicon-carbon composite material. In some embodiments, $I_B$ represents an intensity of a corresponding characteristic peak between 475 $cm^{-1}$ and 485 $cm^{-1}$ in the Raman spectrum of the silicon-carbon composite material. In some embodiments, $I_B$ represents

an intensity of a characteristic peak at any wavelength of 475 $cm^{-1}$, 476 $cm^{-1}$, 477 $cm^{-1}$, 478 $cm^{-1}$, 479 $cm^{-1}$, 480 $cm^{-1}$, 481 $cm^{-1}$, 482 $cm^{-1}$, 483 $cm^{-1}$, 484 $cm^{-1}$, or 85 $cm^{-1}$ in the Raman spectrum of the silicon-carbon composite material, or an intensity of a corresponding characteristic peak within a range defined by any two of these wavelength values.

In this application, the D peak and G peak in the Raman spectrum are characteristic peaks of carbon atom crystals, located near 1360±5 $cm^{-1}$ and 1580±5 $cm^{-1}$, respectively. The D peak represents defects in the carbon atom crystal and is inversely proportional to the degree of order of the carbon structure; the G peak represents in-plane stretching vibrations of $sp^2$ hybridized carbon atoms, reflecting the degree of graphitization of the carbon structure. An intensity ratio of the D peak to the G peak in the Raman spectrum can be used to reflect the defect level of carbon. In this application, $I_D$ represents an intensity of a peak at 1360±5 $cm^{-1}$ in the Raman spectrum of the silicon-carbon composite material, and $I_G$ represents an intensity of a peak at 1580±5 $cm^{-1}$ in the Raman spectrum of the silicon-carbon composite material. A height ratio of peaks at 1360±5 $cm^{-1}$ and 1580±5 $cm^{-1}$ in the Raman spectrum, namely the ratio R' of $I_D$ to $I_G$, can be used to represent the defect level of the carbon material.

In this application, $I_D$ represents an intensity of a peak at 1360±5 $cm^{-1}$ in the Raman spectrum of the silicon-carbon composite material. In some embodiments, $I_D$ represents an intensity of a corresponding peak between 1355 $cm^{-1}$ and 1365 $cm^{-1}$ in the Raman spectrum of the silicon-carbon composite material. In some embodiments, $I_D$ represents an intensity of a characteristic peak at any wavelength of 1355 $cm^{-1}$, 1356 $cm^{-1}$, 1357 $cm^{-1}$, 1358 $cm^{-1}$, 1359 $cm^{-1}$, 1360 $cm^{-1}$, 1361 $cm^{-1}$, 1362 $cm^{-1}$, 1363 $cm^{-1}$, 1364 $cm^{-1}$, or 1365 $cm^{-1}$ in the Raman spectrum of the silicon-carbon composite material, or an intensity of a corresponding characteristic peak within a range defined by any two of these wavelength values.

In this application, $I_G$ represents an intensity of a peak at 1580±5 $cm^{-1}$ in the Raman spectrum of the silicon-carbon composite material. In some embodiments, $I_G$ represents an intensity of a corresponding peak between 1575 $cm^{-1}$ and 1585 $cm^{-1}$ in the Raman spectrum of the silicon-carbon composite material. In some embodiments, $I_G$ represents an intensity of a characteristic peak at any wavelength of 1575 $cm^{-1}$, 1576 $cm^{-1}$, 1577 $cm^{-1}$, 1578 $cm^{-1}$, 1579 $cm^{-1}$, 1579 $cm^{-1}$, 1580 $cm^{-1}$, 1581 $cm^{-1}$, 1582 $cm^{-1}$, 1583 $cm^{-1}$, 1584 $cm^{-1}$, or 1585 $cm^{-1}$ in the Raman spectrum of the silicon-carbon composite material, or an intensity of a corresponding characteristic peak within a range defined by any two of these wavelength values.

In some embodiments of this application, when a ratio of R to R' in the Raman spectrum characteristic of the silicon-carbon composite material falls within the range of this application, the secondary battery can exhibit significantly improved electrical conductivity, low-temperature performance, cycling performance, and swelling resistance while maintaining a high specific capacity. Therefore, in the design of the silicon-carbon composite material of this application, the long-term performance of the silicon-carbon composite material can be predicted using the ratio of R to R'. In some embodiments, when an R/R' value of the silicon-carbon composite material ranges from 0.61 to 0.78, the silicon-carbon composite material achieves an optimal balance between crystalline silicon and amorphous silicon and between carbon defects and carbon graphitization. This enables the silicon-carbon composite material to exhibit significantly improved electrical conductivity, low-temperature performance, cycling performance, and swelling resistance while maintaining a high specific capacity.

In some embodiments of this application, the R/R' value may be 0.611, 0.612, 0.613, 0.615, 0.516, 0.617, 0.618, 0.619, 0.62, 0.63, 0.64, 0.65, 0.66, 0.67, 0.68, 0.69, 0.70, 0.71, 0.72, 0.73, 0.74, 0.75, 0.76, 0.77, 0.771, 0.772, 0.773, 0.774, 0.775, 0.776, 0.777, 0.778, or in a range defined by any two of these values. In some embodiments, when the R/R' value is too low, such as 0.61 or lower, although the cycling performance and swelling resistance of the lithium-ion battery are excellent, its specific capacity, initial Coulombic efficiency, and electrical conductivity are significantly reduced. In some embodiments, when the R/R' value is too high, such as 0.78 or higher, although the lithium-ion battery has a relatively high specific capacity, initial Coulombic efficiency, and electrical conductivity, its cycling performance and swelling resistance are significantly reduced.

In some embodiments of this application, a range of R in the Raman spectrum characteristic of the silicon-carbon composite material is: $0.78 \leq R \leq 0.9$; and a range of R' in the Raman spectrum characteristic of the silicon-carbon composite material is: $1.2 \leq R' \leq 1.25$. In some embodiments, when a ratio R of $I_A$ to $I_B$ and a ratio R' of $I_D$ to $I_G$ in the Raman spectrum characteristic of the silicon-carbon composite material fall within the ranges of this application, the secondary battery can exhibit significantly improved electrical conductivity, low-temperature performance, cycling performance, and swelling resistance while maintaining a high specific capacity. Therefore, in the design of the silicon-carbon composite material of this application, the long-term performance of the silicon-carbon composite material can be predicted using the ratio R of $I_A$ to $I_B$ and the ratio R' of $I_D$ to $I_G$. In some embodiments, when the ratio R of $I_A$ to $I_B$ of the silicon-carbon composite material ranges from 0.78 to 0.9 and the ratio R' of $I_D$ to $I_G$ ranges from 1.2 to 1.25, the silicon-carbon composite material achieves an optimal balance between crystalline silicon and amorphous silicon and between carbon defects and carbon graphitization. This enables the silicon-carbon composite material to exhibit significantly improved electrical conductivity, low-temperature performance, cycling performance, and swelling resistance while maintaining a high specific capacity.

In some embodiments of this application, the ratio R of $I_A$ to $I_B$ of the silicon-carbon composite material may be 0.78, 0.79, 0.80, 0.81, 0.82, 0.83, 0.84, 0.85, 0.86, 0.87, 0.88, 0.89, 0.90, or in a range defined by any two of these values. In

some embodiments, when the R value is too high, the crystalline silicon content in the silicon-carbon composite material is too high, which deteriorates its cycling performance and swelling resistance. In some embodiments, when the R value is too low, the amorphous silicon content in the silicon-carbon composite material is too high, which is not conducive to the specific capacity and initial Coulombic efficiency of the silicon-carbon composite material. In some embodiments, the ratio R' of $I_D$ to $I_G$ of the silicon-carbon composite material may be 1.2, 1.21, 1.22, 1.23, 1.24, 1.25, or in a range defined by any two of these values. In some embodiments, when the R' value is too high, the defect degree of the silicon-carbon composite material is too high, which increases side reactions and reduces electrical conductivity, affecting its cycling performance and low-temperature performance. In some embodiments, when the R' value is too low, although the electrical conductivity of the silicon-carbon composite material is improved, the defect degree is too low, which is not conducive to buffering the volume swelling of the material.

In other words, when the ratio R of $I_A$ to $I_B$ and the ratio R' of $I_D$ to $I_G$ of the silicon-carbon composite material of this application are either too high or too low, the performance of the silicon-carbon composite material is significantly affected. In some embodiments, when the ratio R of $I_A$ to $I_B$ and the ratio R' of $I_D$ to $I_G$ of the silicon-carbon composite material are too low, although the cycling performance and swelling resistance of the lithium-ion battery are excellent, its specific capacity, initial Coulombic efficiency, and electrical conductivity are significantly reduced. In some embodiments, when the ratio R of $I_A$ to $I_B$ and the ratio R' of $I_D$ to $I_G$ of the silicon-carbon composite material are too high, although the lithium-ion battery has a relatively high specific capacity, initial Coulombic efficiency, and electrical conductivity, its cycling performance and swelling resistance are significantly reduced, and the excessively high R and R' values also deteriorate the low-temperature performance of the silicon-carbon composite material.

In some embodiments of this application, the elemental silicon includes at least one of silicon nanoparticles, silicon submicron particles, or a silicon nanofilm. In some embodiments of this application, the carbon material includes a porous carbon framework and a carbon coating layer. In the silicon-carbon composite material of this application, the elemental silicon endows the silicon-carbon composite material with high specific capacity, and the carbon material in the silicon-carbon composite material not only buffers the volume swelling of silicon to some extent but also enhances the electrical conductivity of the silicon-carbon composite material.

In some embodiments of this application, based on a mass of the silicon-carbon composite material, a ratio of a content a of carbon element to a content b of silicon element in the silicon-carbon composite material satisfies the range: $0.5 < a/b < 10$. In some embodiments, the ratio of the content a of the carbon element to the content b of the silicon element in the silicon-carbon composite material satisfies the range: $1.07 < a/b < 2.03$. In some embodiments, the ratio of the content a of the carbon element to the content b of the silicon element in the silicon-carbon composite material satisfies the range: $1.1 < a/b < 2$. In some embodiments, a/b may be 1.08, 1.1, 1.15, 1.2, 1.25, 1.3, 1.35, 1.40, 1.45, 1.50, 1.55, 1.60, 1.65, 1.70, 1.75, 1.80, 1.85, 1.90, 1.95, 2.0, 2.01, 2.02, or in a range defined by any two of these values. In some embodiments, controlling the ratio of a to b within the above ranges enables the silicon-carbon composite material to have a high specific capacity, allows for buffering of the volume swelling of the silicon-carbon composite material to some extent, and enhances the electrical conductivity of the silicon-carbon composite material. In some embodiments, when the ratio of a to b is too high, although the silicon-carbon composite material has low volume swelling and high electrical conductivity, its specific capacity is low. In some embodiments, when the ratio of a to b is too low, although the silicon-carbon composite material has a high specific capacity, its swelling resistance and electrical conductivity are low.

In some embodiments of this application, based on the mass of the silicon-carbon composite material, the content a of carbon element in the silicon-carbon composite material satisfies the range: 40wt% < a < 90wt%, and the content b of silicon element in the silicon-carbon composite material satisfies the range: 10wt% < b < 60wt%. In some embodiments, the content a of the carbon element in the silicon-carbon composite material satisfies the range: 50wt% < a < 64.8wt%, and the content b of the silicon element in the silicon-carbon composite material satisfies the range: 31.9wt% < b < 46.6wt%. In some embodiments, the content a of the carbon element in the silicon-carbon composite material satisfies the range: 52wt% < a < 64wt%, and the content b of the silicon element in the silicon-carbon composite material satisfies the range: 32wt% < b < 44wt%. In some embodiments, the content a of the carbon element in the silicon-carbon composite material may be 50.1wt%, 50.5wt%, 51wt%, 52wt%, 52.1wt%, 52.5wt%, 53wt%, 54wt%, 55wt%, 56wt%, 57wt%, 58wt%, 59wt%, 60wt%, 61wt%, 62wt%, 63wt%, 64wt%, 64.5wt%, 64.6wt%, 64.7wt%, or in a range defined by any two of these values. In some embodiments, the content b of the silicon element in the silicon-carbon composite material may be 31.9wt% < b < 46.6wt% and may be 31.9wt%, 32wt%, 33wt%, 34wt%, 35wt%, 36wt%, 37wt%, 38wt%, 39wt%, 40wt%, 41wt%, 42wt%, 43wt%, 44wt%, 45wt%, 46wt%, 46.1wt%, 46.2wt%, 46.3wt%, 46.4wt%, 46.5wt%, or in a range defined by any two of these values. In some embodiments, controlling the values of a and b within the above ranges enables the silicon-carbon composite material to have a high specific capacity, allows for buffering of the volume swelling of the silicon-carbon composite material to some extent, and enhances the electrical conductivity of the silicon-carbon composite material. In some embodiments, when the content a is too high, the specific capacity of the silicon-carbon composite material is deteriorated. In some embodiments, when the content a is too low, the swelling resistance and electrical conductivity of the silicon-carbon composite material are reduced. Conversely, in some embodiments, when the content b is too high, the swelling resistance and electrical conductivity of the silicon-carbon composite material are reduced. In

some embodiments, when the content b is too low, the specific capacity of the silicon-carbon composite material is deteriorated.

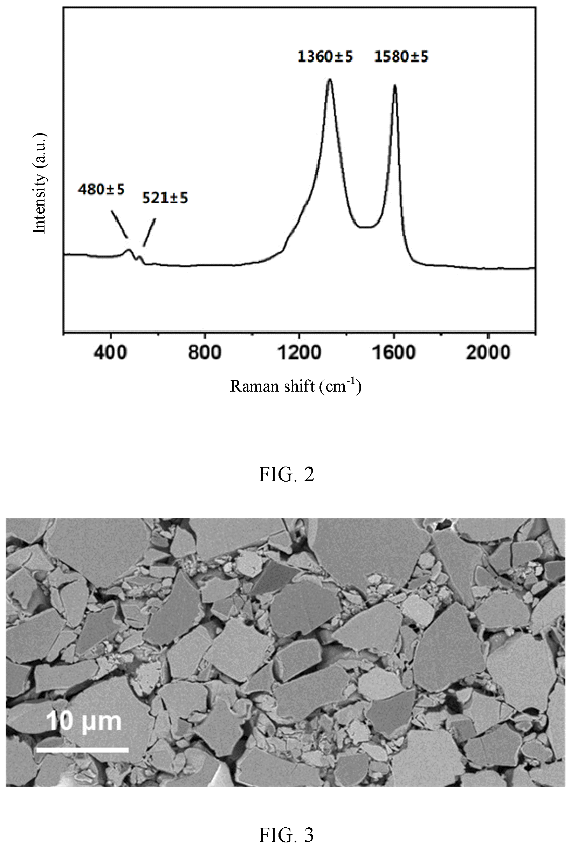

In some embodiments of this application, observation of an SEM image of an internal cross-section of the silicon-carbon composite material in backscattered mode reveals that internal surfaces of particles are smooth, pores inside the particles have a pore size of less than 50 nm, and some silicon-rich regions are present on an outer surface of the particles. In some embodiments, FIG. 3 is an SEM image of a cross-section of a silicon-carbon composite material in backscattered mode. Observation of the SEM image of the cross-section of the silicon-carbon composite material in backscattered mode reveals that the interior of the particles is smooth and flat, featuring an internal structure with pores of small pore size, without macropore structures, and some silicon-rich regions are present on the outer surface of the particles. The smooth and flat internal structure with pores of small pore size enhances the deposition uniformity inside the particles of the silicon-carbon composite material and prevents the presence of large pores that could otherwise lead to low capacity due to the absence of silicon deposition inside the silicon-carbon composite material. Additionally, certain silicon-rich regions on the outer surface of the particles enable the silicon-carbon composite material to have a high specific capacity and initial Coulombic efficiency.

In some embodiments of this application, a size of silicon microcrystals in the silicon-carbon composite material is less than 1 nm. In some embodiments, the size of the silicon microcrystals in the silicon-carbon composite material ranges from 0.8 nm to 0.95 nm. In some embodiments, the size of the silicon microcrystals in the silicon-carbon composite material may be 0.99 nm, 0.98 nm, 0.97 nm, 0.96 nm, 0.95 nm, 0.94 nm, 0.93 nm, 0.92 nm, 0.91 nm, 0.90 nm, 0.89 nm, 0.88 nm, 0.87 nm, 0.86 nm, 0.85 nm, 0.84 nm, 0.83 nm, 0.82 nm, 0.81 nm, 0.80 nm, 0.70 nm, 0.60 nm, 0.50 nm, 0.40 nm, 0.30 nm, 0.20 nm, or in a range defined by any two of these values. In some embodiments, controlling the size of the silicon microcrystals in the silicon-carbon composite material within the above range can enhance the lithium intercalation and deintercalation activity of the silicon microcrystals, and accelerate the transport of active ions, and the relatively small size of the silicon microcrystals can buffer deformation stress during charging and discharging, thereby improving the cycling performance and swelling resistance of the silicon-carbon composite material.

In some embodiments of this application, a particle size $D_v50$ of the silicon-carbon composite material ranges from 5 μm to 10 μm, and $D_v99$ ranges from 15 μm to 25 μm. In some embodiments, the particle size $D_v50$ ranges from 5 μm to 6.5 μm, and the $D_v99$ ranges from 15 μm to 19 μm. In some embodiments, the particle size $D_v50$ may be 5 μm, 5.5 μm, 6.0 μm, 6.5 μm, 7.0 μm, 7.5 μm, 8.0 μm, 8.5 μm, 9.0 μm, 9.5 μm, 10.0 μm, or in a range defined by any two of these values. The $D_v99$ may be 15 μm, 15.5 μm, 16 μm, 16.5 μm, 17 μm, 17.5 μm, 18 μm, 18.5 μm, 19 μm, 19.5 μm, 20 μm, 20.5 μm, 21 μm, 21.5 μm, 22 μm, 22.5 μm, 23 μm, 23.5 μm, 24 μm, 24.5 μm, 25 μm, or in a range defined by any two of these values. In some embodiments, controlling the particle size $D_v50$ and $D_v99$ of the silicon-carbon composite material within the above ranges can improve the dispersion uniformity of the slurry, and enhance the transport of active ions, thereby facilitating the improvement of the cycling performance and swelling resistance of the secondary battery.

In this application, $D_v50$ represents a particle size at which a cumulative volume distribution of the silicon-carbon composite material reaches 50% as counted from the small particle size side, and $D_v99$ represents a particle size at which a cumulative volume distribution of the material reaches 99% as counted from the small particle size side.

In some embodiments of this application, a specific surface area of the silicon-carbon composite material ranges from 1 $m^2/g$ to 50 $m^2/g$. In some embodiments, the specific surface area of the silicon-carbon composite material ranges from 4 $m^2/g$ to 8 $m^2/g$. In some embodiments, the specific surface area of the silicon-carbon composite material may be 1 $m^2/g$, 2 $m^2/g$, 3 $m^2/g$, 4 $m^2/g$, 5 $m^2/g$, 6 $m^2/g$, 7 $m^2/g$, 8 $m^2/g$, 9 $m^2/g$, 10 $m^2/g$, 15 $m^2/g$, 20 $m^2/g$, 25 $m^2/g$, 30 $m^2/g$, 35 $m^2/g$, 40 $m^2/g$, 45 $m^2/g$, 50 $m^2/g$, or in a range defined by any two of these values. In some embodiments, the silicon-carbon composite material having a specific surface area within the above range can reduce side reactions between the silicon-carbon composite material and the electrolyte, which is beneficial to improving the cycling performance and swelling resistance of the secondary battery.

In some embodiments of this application, a content of oxygen element in the silicon-carbon composite material ranges from 1.0wt% to 4.0wt%. In some embodiments, the content of the oxygen element in the silicon-carbon composite material ranges from 1.2wt% to 3wt%. In some embodiments, the content of the oxygen element in the silicon-carbon composite material may be 1.0wt%, 1.1wt%, 1.2wt%, 1.3wt%, 1.4wt%, 1.5wt%, 2wt%, 2.5wt%, 3wt%, 3.5wt%, 4wt%, or in a range defined by any two of these values. In some embodiments, controlling the content of the oxygen element in the silicon-carbon composite material within the above range facilitates further balance between the specific capacity, cycling performance, and swelling resistance of the lithium-ion battery, thereby enhancing the overall performance of the lithium-ion battery.

In some embodiments of this application, a first-cycle delithiation specific capacity of the silicon-carbon composite material ranges from 500 mAh/g to 2500 mAh/g. In some embodiments, the first-cycle delithiation specific capacity of the silicon-carbon composite material ranges from 1400 mAh/g to 2000 mAh/g. In some embodiments, the first-cycle delithiation specific capacity of the silicon-carbon composite material may be 500 mAh/g, 600 mAh/g, 700 mAh/g, 800 mAh/g, 900 mAh/g, 1000 mAh/g, 1100 mAh/g, 1200 mAh/g, 1300 mAh/g, 1400 mAh/g, 1500 mAh/g, 1600 mAh/g, 1700 mAh/g, 1800 mAh/g, 1900 mAh/g, 2000 mAh/g, 2100 mAh/g, 22 mAh/g, 2300 mAh/g, 2400 mAh/g, 2500 mAh/g, or in

a range defined by any two of these values. When the first-cycle delithiation specific capacity of the silicon-carbon composite material is within the above range, good gram capacity performance, cycling performance, and swelling resistance of the silicon-carbon composite material can be achieved.

According to a second aspect of this application, this application provides a method for preparing the silicon-carbon composite material. The preparation method includes, but is not limited to, the following steps: adjusting an R value of the silicon-carbon composite material by changing at least one parameter selected from a pyrolysis temperature of a silicon-containing gas, a flow rate of the silicon-containing gas, a duration of introducing the silicon-containing gas, a duration of a micro-oxidation, a temperature of the micro-oxidation, or a flow rate of an introduced oxygen; and/or adjusting an R' value of the silicon-carbon composite material by changing at least one parameter selected from a pyrolysis temperature of a carbon source gas, a flow rate of the carbon source gas, or a duration of introducing the carbon source gas.

In some embodiments of this application, the preparation method includes, but is not limited to, the following steps:

(1) silicon deposition: using a porous carbon material as a precursor and a silicon-containing gas as a silicon source, absorbing and depositing elemental nanosilicon onto pores of the porous carbon material through a chemical vapor deposition;

(2) micro-oxidation: introducing oxygen to perform a micro-oxidation on nanosilicon on a shallow surface and an outer surface of the porous carbon material;

(3) carbon deposition: after the micro-oxidation is completed, introducing a carbon source gas to deposit the carbon source gas on an outer surface of the material obtained in step (2) to form a carbon coating layer, thereby obtaining a silicon-carbon material coated with the carbon coating layer; and

(4) grinding and sieving the silicon-carbon composite material obtained in step (3) to obtain the silicon-carbon composite material.

Steps (1) to (3) are all performed under a protective atmosphere of inert gas and a gas phase condition of a slight positive pressure, the slight positive pressure condition ranging from 0.1 kPa to 5 kPa. In some embodiments, the slight positive pressure condition may be 0.1 kPa, 0.5 kPa, 1.0 kPa, 1.5 kPa, 2.0 kPa, 2.5 kPa, 3.0 kPa, 3.5 kPa, 4.0 kPa, 4.5 kPa, 5.0 kPa, or in a range defined by any two of these values.

In some embodiments of this application, in step (1), the slight positive pressure condition may range from 1.5 kPa to 2.5 kPa. In step (2), the slight positive pressure condition ranges from 0.5 kPa to 1.5 kPa. In step (3), the slight positive pressure condition ranges from 2.0 kPa to 3.0 kPa.

In some embodiments, the inert gas may be argon.

In the above preparation method, the R value of the silicon-carbon composite material can be adjusted by changing the pyrolysis temperature, the flow rate of the silicon-containing gas, and the duration of introducing the silicon-containing gas. In some embodiments, increasing the pyrolysis temperature increases the R value of the silicon-carbon composite material. In some embodiments, decreasing the pyrolysis temperature decreases the R value of the silicon-carbon composite material. In some embodiments, increasing the flow rate of the silicon-containing gas increases the R value of the silicon-carbon composite material. In some embodiments, decreasing the flow rate of the silicon-containing gas decreases the R value of the silicon-carbon composite material. In some embodiments, extending the duration of introducing the silicon-containing gas increases the R value of the silicon-carbon composite material. In some embodiments, shortening the duration of introducing the silicon-containing gas decreases the R value of the silicon-carbon composite material. Additionally, the R value of the silicon-carbon composite material can also be adjusted by changing the duration of the micro-oxidation and the flow rate of the introduced oxygen. In some embodiments, extending the duration of the micro-oxidation decreases the R value of the silicon-carbon composite material. In some embodiments, shortening the duration of the micro-oxidation increases the R value of the silicon-carbon composite material.

In some embodiments of this application, the R' value of the silicon-carbon composite material can also be adjusted by changing the pyrolysis temperature, the flow rate of the carbon source gas, and the duration of introducing the carbon source gas. In some embodiments, increasing the pyrolysis temperature decreases the R' value of the silicon-carbon composite material. In some embodiments, decreasing the pyrolysis temperature increases the R' value of the silicon-carbon composite material. In some embodiments, increasing the flow rate of the carbon source gas increases the R' value of the silicon-carbon composite material. In some embodiments, decreasing the flow rate of the carbon source gas slightly decreases the R' value of the silicon-carbon composite material. In some embodiments, extending the duration of introducing the carbon source gas increases the R' value of the silicon-carbon composite material. In some embodiments, shortening the duration of introducing the carbon source gas slightly decreases the R' value of the silicon-carbon composite material.

Those skilled in the art can adjust the pyrolysis temperature of the silicon-containing gas or the carbon source gas, the gas flow rate of the silicon-containing gas or the carbon source gas, the duration of introducing the silicon-

containing gas or the carbon source gas, the temperature of the micro-oxidation, the duration of the micro-oxidation, and the flow rate of the introduced oxygen as needed. In some embodiments, the pyrolysis temperature of the silicon-containing gas or the carbon source gas ranges from 400°C to 800°C, the gas flow rate of the introduced silicon-containing gas or carbon source gas ranges from 100 sccm to 800 sccm, the duration of introducing the silicon-containing gas or the carbon source gas ranges from 1 h to 20 h, the flow rate of the introduced oxygen ranges from 50 sccm to 200 sccm, the duration of the micro-oxidation ranges from 1 h to 20 h, and the temperature of the micro-oxidation ranges from 50°C to 200°C.

In some embodiments of this application, the silicon-containing gas includes, but is not limited to, at least one of monosilane, disilane, trisilane, tetrasilane, chlorosilane, dichlorosilane, trichlorosilane, or tetrachlorosilane; the carbon source gas includes, but is not limited to, at least one of methane, acetylene, ethylene, ethane, propyne, propylene, propane, butyne, butene, or butane; and the porous carbon material includes, but is not limited to, at least one of activated carbon, expanded graphite, carbon molecular sieve, carbon nanofibers, or carbon nanotubes. In some embodiments, the activated carbon can be obtained by activation of biochar, resin carbon, coke, or the like.

In some embodiments of this application, a specific surface area of the porous carbon material ranges from 1000 $m^2/g$ to 2500 $m^2/g$. In some embodiments, the specific surface area of the porous carbon material may be 1000 $m^2/g$, 1100 $m^2/g$, 1200 $m^2/g$, 1300 $m^2/g$, 1400 $m^2/g$, 1500 $m^2/g$, 1600 $m^2/g$, 1700 $m^2/g$, 1800 $m^2/g$, 1900 $m^2/g$, 2000 $m^2/g$, 2100 $m^2/g$, 2200 $m^2/g$, 2300 $m^2/g$, 2400 $m^2/g$, 2500 $m^2/g$, or in a range defined by any two of these values. A pore volume of the porous carbon material ranges from 0.5 $cm^3/g$ to 1.5 $cm^3/g$. In some embodiments, the pore volume of the porous carbon material may be 0.5 $cm^3/g$, 0.6 $cm^3/g$, 0.7 $cm^3/g$, 0.8 $cm^3/g$, 0.9 $cm^3/g$, 1.0 $cm^3/g$, 1.1 $cm^3/g$, 1.2 $cm^3/g$, 1.3 $cm^3/g$, 1.4 $cm^3/g$, 1.5 $cm^3/g$, or in a range defined by any two of these values. Additionally, a pore size distribution of the porous carbon material can also be changed. In some embodiments of this application, the porous carbon material contains 0% to 30% ultramicropores, 0% to 30% submicropores, 0% to 60% large micropores, and 0% to 20% meso-macropores. Ultra-micropores are defined as pores with a pore size less than 0.7 nm, submicropores are defined as pores with a pore size between 0.7 nm and 1.0 nm, large micropores are defined as pores with a pore size between 1.0 nm and 2.0 nm, and meso-macropores are defined as pores with a pore size greater than 2 nm. In some embodiments, when indicators of the porous carbon material such as the specific surface area, pore volume, and pore size distribution are within the above ranges, it is beneficial to the adsorption and deposition of the silicon-containing gas.

In some embodiments of this application, a pyrolysis temperature of the silicon-containing gas may range from 400°C to 800°C. In some embodiments, the pyrolysis temperature of the silicon-containing gas or the carbon source gas may range from 300°C to 500°C. In some embodiments, the pyrolysis temperature of the silicon-containing gas may be 400°C, 450°C, 500°C, 550°C, 600°C, 650°C, 700°C, 750°C, 800°C, or in a range defined by any two of these values.

In some embodiments of this application, a flow rate of the introduced silicon-containing gas may range from 100 sccm to 700 sccm. In some embodiments, the flow rate of the introduced silicon-containing gas may range from 400 sccm to 600 sccm. In some embodiments, the flow rate of the introduced silicon-containing gas may be 100 sccm, 150 sccm, 200 sccm, 250 sccm, 300 sccm, 350 sccm, 400 sccm, 450 sccm, 500 sccm, 550 sccm, 600 sccm, 650 sccm, 700 sccm, or in a range defined by any two of these values.

In some embodiments of this application, a duration of introducing the silicon-containing gas ranges from 1 h to 20 h. In some embodiments, the duration of introducing the silicon-containing gas ranges from 7 h to 15 h. In some embodiments, the duration of introducing the silicon-containing gas can be 1 h, 2 h, 3 h, 4 h, 5 h, 6 h, 7 h, 8 h, 9 h, 10 h, 11 h, 12 h, 13 h, 14 h, 15 h, 16 h, 17 h, 18 h, 19 h, 20 h, or in a range defined by any two of these values.

In some embodiments of this application, a flow rate of the introduced oxygen may range from 50 sccm to 200 sccm. In some embodiments, the flow rate of the introduced oxygen may range from 100 sccm to 150 sccm. In some embodiments, the flow rate of the introduced oxygen may be 50 sccm, 60 sccm, 70 sccm, 80 sccm, 90 sccm, 100 sccm, 110 sccm, 120 sccm, 130 sccm, 140 sccm, 150 sccm, 160 sccm, 170 sccm, 180 sccm, 190 sccm, 200 sccm, or in a range defined by any two of these values.

In some embodiments of this application, a duration of introducing the oxygen may range from 1 h to 20 h. In some embodiments, the duration of introducing the oxygen may range from 3 h to 8 h. In some embodiments, the duration of introducing the silicon-containing gas may be 1 h, 2 h, 3 h, 4 h, 5 h, 6 h, 7 h, 8 h, 9 h, 10 h, 11 h, 12 h, 13 h, 14 h, 15 h, 16 h, 17 h, 18 h, 19 h, 20 h, or in a range defined by any two of these values.

In some embodiments of this application, a temperature of the micro-oxidation ranges from 50°C to 200°C. In some embodiments, the temperature of the micro-oxidation ranges from 50°C to 150°C. In some embodiments, the temperature of the micro-oxidation may be 50°C, 60°C, 70°C, 80°C, 90°C, 100°C, 110°C, 120°C, 130°C, 140°C, 150°C, 160°C, 170°C, 180°C, 190°C, 200°C, or in a range defined by any two of these values.

In some embodiments of this application, a pyrolysis temperature of the carbon source gas ranges from 400°C to 800°C. In some embodiments, the pyrolysis temperature of the carbon source gas ranges from 450°C to 600°C. In some embodiments, the pyrolysis temperature of the carbon source gas may be 400°C, 450°C, 500°C, 550°C, 600°C, 650°C, 700°C, 750°C, 800°C, or in a range defined by any two of these values.

In some embodiments of this application, a flow rate of introducing the carbon source gas ranges from 200 sccm

to 800 sccm. In some embodiments, the flow rate of introducing the carbon source gas ranges from 450 sccm to 700 sccm. In some embodiments, the flow rate of introducing the carbon source gas may be 200 sccm, 250 sccm, 300 sccm, 350 sccm, 400 sccm, 450 sccm, 500 sccm, 550 sccm, 600 sccm, 650 sccm, 700 sccm, 750 sccm, 800 sccm, or in a range defined by any two of these values.

In some embodiments of this application, a duration of introducing the carbon source gas ranges from 1 h to 20 h. In some embodiments, the duration of introducing the carbon source gas ranges from 3 h to 10 h. In some embodiments, the duration of introducing the carbon source gas may be 1 h, 2 h, 3 h, 4 h, 5 h, 6 h, 7 h, 8 h, 9 h, 10 h, 11 h, 12 h, 13 h, 14 h, 15 h, 16 h, 17 h, 18 h, 19 h, 20 h, or in a range defined by any two of these values.

In some embodiments of this application, in step (1), a volume-based mixing ratio of silane gas to inert gas may be 5-20:80-100. In step (3), a volume-based mixing ratio of carbon source gas to inert gas may be 40-60:40-60.

In some embodiments of this application, in step (4) of grinding and sieving the obtained silicon-carbon composite material, a mesh size of the sieve used ranges from 300 to 500. In some embodiments, the mesh size may be 300, 350, 400, 450, 450, 500, or in a range defined by any two of these values.

According to a third aspect of this application, this application provides a negative electrode sheet. The negative electrode sheet includes a negative electrode current collector and a negative electrode active substance disposed on at least one surface of the negative electrode current collector; where the negative electrode active substance includes the silicon-carbon composite material in any of the foregoing embodiments. Therefore, in some embodiments, the negative electrode sheet including the silicon-carbon composite material exhibits significantly improved electrical conductivity, low-temperature performance, cycling performance, and swelling resistance while maintaining a high specific capacity.

In some embodiments of this application, the negative electrode current collector in the negative electrode sheet of this application may include, but is not limited to, at least one of copper foil, copper alloy foil, nickel foil, stainless steel foil, titanium foil, nickel foam, copper foam, or composite current collector (for example, a carbon-copper composite current collector, a nickel-copper composite current collector, or a titanium-copper composite current collector). A thickness of the negative electrode current collector in the negative electrode sheet of this application may include, but is not limited to, 6 μm to 12 μm. A thickness of the negative electrode sheet of this application may include, but is not limited to, 50 μm to 150 μm.

In some embodiments of this application, the negative electrode active substance of this application may further include a conductive agent and a binder. The conductive agent may include, but is not limited to, at least one of acetylene black, conductive carbon black (Super P), carbon nanotubes (CNTs), carbon fibers, flake graphite, Ketjen black, or graphene; and the binder may include, but is not limited to, at least one of sodium alginate, polyacrylate, polyimide, polyamide, polyamideimide, polyvinylidene fluoride, polystyrene butadiene copolymer (styrene-butadiene rubber), polyvinyl alcohol, polytetrafluoroethylene, polyacrylonitrile, sodium carboxymethyl cellulose, potassium carboxymethyl cellulose, sodium hydroxymethyl cellulose, or potassium hydroxymethyl cellulose. For a mass ratio between the silicon-carbon composite material, the conductive agent, and the binder in the negative electrode sheet of this application, those skilled in the art can make selection according to actual needs.

In some embodiments of this application, the negative electrode active substance of this application may further include graphite, and a mass proportion of the graphite in the negative electrode active substance ranges from 35wt% to 95wt%. In some embodiments, the mass proportion of the graphite in the negative electrode active substance may be 35wt%, 40wt%, 45wt%, 50wt%, 55wt%, 60wt%, 65wt%, 70wt%, 75wt%, 80wt%, 85wt%, 95wt%, or in a range defined by any two of these values. In some embodiments, when the mass proportion of the graphite in the negative electrode active substance is within the above range, good energy density and rate performance of a secondary battery can be achieved and internal resistance can be reduced.

In some embodiments of this application, a particle size $D_v50$ of the negative electrode active substance ranges from 5 μm to 15 μm, and $D_v99$ ranges from 15 μm to 40 μm. In some embodiments, the particle size $D_v50$ may be 5 μm, 5.5 μm, 6.0 μm, 6.5 μm, 7.0 μm, 7.5 μm, 8.0 μm, 8.5 μm, 9.0 μm, 9.5 μm, 10.0 μm, 10.5 μm, 11 μm, 11.5 μm, 12 μm, 12.5 μm, 13 μm, 13.5 μm, 14 μm, 14.5 μm, 15 μm, or in a range defined by any two of these values. The $D_V99$ may be 15 μm, 16 μm, 17 μm, 18 μm, 19 μm, 20 μm, 21 μm, 22 μm, 23 μm, 24 μm, 25 μm, 26 μm, 27 μm, 28 μm, 29 μm, 30 μm, 31 μm, 32 μm, 33 μm, 34 μm, 35 μm, 36 μm, 37 μm, 38 μm, 39 μm, 40 μm, or in a range defined by any two of these values. In this application, $D_v50$ represents a particle size at which a cumulative volume distribution of the negative electrode active substance layer reaches 50% as counted from the small particle size side, and $D_v99$ represents a particle size at which a cumulative volume distribution of the negative electrode active substance reaches 99% as counted from the small particle size side.

In some embodiments of this application, a specific surface area of the negative electrode active substance ranges from 1 $m^2$/g to 10 $m^2$/g. In some embodiments, the specific surface area of the negative electrode active substance may be 1 $m^2$/g, 2 $m^2$/g, 3 $m^2$/g, 4 $m^2$/g, 5 $m^2$/g, 6 $m^2$/g, 7 $m^2$/g, 8 $m^2$/g, 9 $m^2$/g, 10 $m^2$/g, or in a range defined by any two of these values. The negative electrode active substance having a specific surface area within the above range can reduce side reactions between the negative electrode active substance and an electrolyte, which is beneficial to improving cycling performance and swelling resistance of a secondary battery.

In some embodiments of this application, a first-cycle delithiation specific capacity of the negative electrode active substance ranges from 400 mAh/g to 1000 mAh/g. In some embodiments, the first-cycle delithiation specific capacity of the negative electrode active substance can be 400 mAh/g, 500 mAh/g, 600 mAh/g, 700 mAh/g, 800 mAh/g, 900 mAh/g, 1000 mAh/g, or a range defined by any two of these values. When the first-cycle delithiation specific capacity of the negative electrode active substance is within the above range, it can balance energy density, cycling performance, and swelling resistance of a secondary battery.

In some embodiments of this application, a preparation method of the negative electrode sheet can be prepared using methods known in the art, including but not limited to: mixing the silicon-carbon composite material of this application with a conductive agent and a binder to obtain a mixture slurry, and evenly applying the mixture slurry on a negative electrode current collector, followed by drying to obtain the negative electrode sheet.

According to a fourth aspect of this application, this application provides an electrochemical apparatus including the negative electrode sheet in any of the foregoing embodiments.

In some embodiments of this application, the electrochemical apparatus of this application includes, but is not limited to: all kinds of primary batteries, secondary batteries, fuel cells, solar cells, or capacitors. In some embodiments, the electrochemical apparatus is a lithium secondary battery.

In some embodiments of this application, the lithium secondary battery includes, but is not limited to: a lithium metal secondary battery, a lithium-ion secondary battery, a lithium polymer secondary battery, or a lithium-ion polymer secondary battery.

In some embodiments of this application, the secondary battery of this application includes a positive electrode sheet, a separator, an electrolyte, and the negative electrode sheet in any of the foregoing embodiments. Therefore, the secondary battery of this application exhibits significantly improved electrical conductivity, low-temperature performance, cycling performance, and swelling resistance while maintaining a high specific capacity.

In some embodiments, the positive electrode sheet includes a positive electrode current collector and a positive electrode material disposed on at least one surface of the positive electrode current collector. The positive electrode current collector includes, but is not limited to: at least one of aluminum foil, aluminum alloy foil, or composite current collector (for example, an aluminum-carbon composite current collector). The positive electrode material includes a positive electrode active material, and the positive electrode active material may include, but is not limited to: at least one of lithium nickel cobalt manganese oxide (for example, common NCM811, NCM622, NCM523, and NCM111), lithium nickel cobalt aluminate, lithium iron phosphate, lithium-rich manganese-based material, lithium cobalt oxide ($LiCoO_2$), lithium manganese oxide, lithium manganese iron phosphate, or lithium titanate. In some embodiments, the positive electrode material further includes a conductive agent and a binder, and the conductive agent and the binder may be at least one of the conductive agents selected for the foregoing negative electrode material or the foregoing binder.

In some embodiments, the positive electrode sheet can be prepared using preparation methods known in the art, including, but not limited to, the following steps: mixing a positive electrode active material, a conductive agent, and a binder in a solvent to obtain an active material mixture slurry, and evenly applying the mixture slurry on a current collector to obtain the positive electrode sheet. In some embodiments, the solvent includes, but is not limited to, N-methylpyrrolidone.

In some embodiments, the separator of the secondary battery is used to separate the positive electrode sheet and the negative electrode sheet, prevent internal short circuit of the secondary battery, and allow electrolyte ions to pass freely, without affecting the electrochemical charge-discharge process. In some embodiments, a material of the separator may include, but is not limited to: at least one of polyethylene (PE), polypropylene (PP)-based polyolefin (PO), polyester (for example, polyethylene terephthalate (PET) film), cellulose, polyimide (PI), polyamide (PA), spandex, or aramid. In some embodiments, a type of the separator may include, but is not limited to: at least one of woven film, non-woven film, microporous film, composite film, rolled film, or spun film.

In some embodiments, the separator of the secondary battery may include a substrate layer and a surface treatment layer on at least one surface of the substrate layer. In some embodiments, the substrate layer is a non-woven fabric, film, or composite film with a porous structure, and a material of the substrate layer may include, but is not limited to: at least one of polyethylene, polypropylene, polyethylene terephthalate, or polyimide. In some embodiments, the surface treatment layer may be a polymer layer or an inorganic layer, or a layer formed by mixing a polymer and an inorganic substance. In some embodiments, the inorganic layer includes inorganic particles and a binder. In some embodiments, the inorganic particles may include, but is not limited to: at least one of aluminum oxide, silicon oxide, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide, or barium sulfate. In some embodiments, the binder may be at least one of the above binders. In some embodiments, the polymer layer contains a polymer, and a material of the polymer may include, but is not limited to: at least one of polyamide, polyacrylonitrile, acrylate polymer, polyacrylic acid, polyacrylate, polyvinylpyrrolidone, polyvinyl ether, polyvinylidene fluoride, or poly(vinylidene fluoridehexafluoropropylene).

In some embodiments, the electrolyte of the secondary battery may include a lithium salt and a non-aqueous solvent. The lithium salt may be selected from at least one of $LiPF_6$, $LiBF_4$, $LiAsF_6$, $LiClO_4$, $LiB(C_6H_5)_4$, $LiCH_3SO_3$,

$LiCF_3SO_3$, or $LiN(SO_2CF_3)_2$. In some embodiments, based on a mass of the electrolyte, a mass percentage of the lithium salt may range from 8% to 15%. In some embodiments, the mass percentage of the lithium salt in the electrolyte may be 8%, 11%, 12.5%, 13%, 15%, or in a range defined by any two of these values. In some embodiments, the non-aqueous solvent may include, but is not limited to: at least one of carbonate compound, carboxylate compound, ether compound, or other organic solvents.

In some embodiments, the secondary battery of this application further includes a packaging bag for accommodating the positive electrode sheet, the separator, the negative electrode sheet, and the electrolyte, as well as other components known in the art in the secondary battery. This application does not limit the other components. The packaging bag is not particularly limited in this application, and may be a packaging bag known in the art.

In some embodiments, the preparation method of a secondary battery of this application may include, but is not limited to, the following steps: stacking the positive electrode sheet, the separator, and the negative electrode sheet in order, and performing an operation such as winding or folding on a resulting stack as needed to obtain an electrode assembly with a wound structure, placing the electrode assembly into the packaging bag, injecting the electrolyte into the packaging bag and sealing the opening to obtain a secondary battery. Alternatively, in some embodiments, the preparation method may include, but is not limited to, the following steps: stacking the positive electrode sheet, the separator, and the negative electrode sheet in order, then fixing four corners of the entire stacked structure with tape to obtain an electrode assembly with a stacked structure, placing the electrode assembly into the packaging bag, injecting the electrolyte into the packaging bag and sealing the opening to obtain a secondary battery. In addition, in some embodiments, an overcurrent prevention element, a guide plate, and the like can also be placed into the packaging bag as needed to prevent pressure rise, overcharge, and overdischarge inside the secondary battery.

According to a fifth aspect of this application, this application provides an electronic apparatus, where the electronic apparatus includes the electrochemical apparatus in any of the foregoing embodiments. In some embodiments, the electronic apparatus includes, but is not limited to: a notebook computer, a peninput computer, a mobile computer, an e-book player, a portable phone, a portable fax machine, a portable copier, a portable printer, a head-mounted stereo headphone, a video recorder, a liquid crystal television, a portable cleaner, a portable CD player, a mini disc, a transceiver, an electronic notebook, a calculator, a memory card, a portable recorder, a radio, a backup power supply, a motor, an automobile, a motorcycle, an assisted bicycle, a bicycle, a lighting appliance, a toy, a game console, a clock, an electric tool, a flash lamp, a camera, a large household storage battery, or a lithium-ion capacitor.

## Examples

The following describes the embodiments of this application in more detail through specific examples and comparative examples.

The test methods used are as follows.

### Tests of parameters related to silicon-carbon composite material

(1) Method for measuring a content of silicon element in the silicon-carbon composite material:
The content of silicon element in the silicon-carbon composite material was measured using ICP (inductively coupled plasma optical emission spectroscopy) technology.

(2) Method for measuring a content of carbon element in the silicon-carbon composite material:
The content of carbon element in the silicon-carbon composite material was measured using ICP (inductively coupled plasma optical emission spectroscopy) technology.

(3) Method for measuring a content of oxygen element in the silicon-carbon composite material:
The secondary battery after 100 cycles was disassembled to obtain a negative electrode sheet. The sheet was naturally dried in a glove box, and then powder was carefully scraped off with a knife. Finally, the collected powder was tested using a German Elementar element analyzer to obtain the content of the oxygen element in the silicon-carbon composite material.

(4) Method for calculating size of silicon microcrystals in the silicon-carbon composite material:
XRD test: Using a D8 Advance device with a Cu target ($\lambda$=1.54178 Å) as the target material at a voltage of 60 kV, testing was conducted in a $2\theta$ range of 10° to 80°. After the XRD pattern of the silicon-carbon composite material was obtained, the size of the silicon microcrystals in the silicon-carbon composite material was calculated using the Debye-Scherrer formula at $2\theta$=28.4°. Herein, K is the Scherrer constant, D is the size of the silicon microcrystals, B is the full width at half maximum of the diffraction peak of the tested sample, $\theta$ is the Bragg diffraction angle, and $\gamma$ is the X-ray wavelength.

(5) Raman spectrum test: An HR Evolution device with a 532 nm solid-state laser (1 MHz, with a power of 100 mV) was

used for testing. After the Raman spectrum of the silicon-carbon composite material is obtained, the intensities of peaks at 521±5 $cm^{-1}$, 480±5 $cm^{-1}$, 1360±5 $cm^{-1}$, and 1580±5 $cm^{-1}$ were taken as $I_A$, $I_B$, $I_D$, and $I_G$, respectively.

(6) SEM test: The silicon-carbon composite material was first polished using an IB-09010CP ion polisher (with a voltage of 6 kV). Then the silicon-carbon composite material was tested using a JEOL-JSM-6700F scanning electron microscope at a voltage of 5 kV and a current of 0.8 nA in backscattered mode.

(7) $D_v50/D_v99$: Using a MasterSizer 2000 device, the silicon-carbon composite material was tested with a detection angle of 0° to 135° to obtain the $D_v50$ and $D_v99$ values of the silicon-carbon composite material.

(8) Specific surface area: Using a TriStar II 3020 device, the BET specific surface area of the silicon-carbon composite material was measured.

(9) Conductivity test: Using a Suzhou Jingge Electronic ST-2255 resistivity tester, the powder conductivity of the silicon-carbon composite material was tested.

**Tests of parameters related to electrical performance**

(1) Preparation processes of half cell and full cell:

Preparation process of negative electrode sheet:

The silicon-carbon composite material of this application was used as a negative electrode active material, conductive carbon black as a conductive agent, and polyacrylic acid as a binder. The mass ratio of the negative electrode active material, conductive carbon black, and polyacrylic acid was 70:20:10. The negative electrode active material, conductive agent, and binder aqueous solution were fully mixed to obtain a mixture slurry, and the mixture slurry was evenly applied on a copper foil, followed by drying to obtain the negative electrode sheet.

Preparation process of positive electrode sheet:

Super P was used as a conductive agent, and PVDF was used as a binder, with a mass ratio of the positive electrode active material ($LiFePO_4$), Super P, and PVDF of 70:20:10. The positive electrode active material, Super P, and PVDF solution were fully mixed to obtain a mixture slurry, and the mixture slurry was evenly applied on an aluminum foil, followed by drying to obtain the positive electrode sheet.

Electrolyte and separator:

In a glove box filled with argon (moisture <10 ppm, oxygen <1 ppm), ethylene carbonate (EC) and dimethyl carbonate (DMC) were mixed to uniformity at a volume ratio of 1:1, $LiPF_6$ and fluoroethylene carbonate (FEC) were slowly added to the mixed solution, and well stirred to obtain a non-aqueous electrolyte. A Celgard 2400 separator was used as the separator.

Assembly of half cell and full cell:

For the above negative electrode sheet, a lithium sheet or positive electrode sheet was used as a counter electrode. In the order of the negative electrode sheet, separator, and lithium sheet or positive electrode sheet, a coin-type half cell was assembled in a glove box, with the lithium sheet as the counter electrode, and a coin-type full cell was assembled, with the positive electrode sheet prepared above as the counter electrode.

(2) First-cycle delithiation specific capacity test:

On a LAND battery test system (LAND CT2001A), the assembled half cell and full cell were subjected to charge-discharge tests. The half cell test was conducted in a working voltage range of 0.01 V to 2 V. The half cell was discharged at a constant current of 0.1 C to 0.01 V, left standing for 5 min, then discharged at a constant current of 50 μA to 0.01 V, left standing for 5 min, charged at a constant current of 0.1 C to 2.0 V, and left standing for 5 min, and the first-cycle charge capacity of the half cell was recorded as the first-cycle delithiation specific capacity.

(3) First-cycle discharge specific capacity test of full cell:

The full cell test was conducted in a working voltage range of 2.4 V to 3.8 V. The full cell was charged at a constant current of 0.1 C to 3.8 V, then charged at a constant voltage of 3.8 V to a cutoff current of 50 μA, left standing for 5 min, discharged at a constant current of 0.1 C to 2.4 V, and left standing for 5 min, and the first-cycle discharge capacity of the full

cell was recorded. First-cycle discharge specific capacity of full cell = first-cycle discharge capacity of full cell/mass of positive electrode active material ($LiFePO_4$).

(4) Thickness swelling rate test of negative electrode sheet:

The full-cell electrochemical apparatus before and after 100 cycles was disassembled to obtain the negative electrode sheet. The thickness of the electrode sheet was measured 12 times with a vernier caliper and averaged. If the thickness of the copper foil is a, the thickness of the electrode sheet before 100 cycles is b, and the thickness of the electrode sheet after 100 cycles is c, then the thickness swelling rate k of the negative electrode sheet after 100 cycles is: $k = (c - b)/(b - a) \times 100\%$.

(5) Low-temperature discharge capacity retention rate test:

At 25°C, the assembled half cell was discharged at a constant current of 0.5 C to 0.01 V, left standing for 5 min, then discharged at a constant current of 50 μA to 0.01 V, left standing for 5 min, charged at a constant current of 0.5 C to 2.0 V, and left standing for 5 min. After three such cycles, the discharge capacity at the third cycle was recorded. Subsequently, the half cell was placed at -10°C for 24 h, discharged at a constant current of 0.5 C to 0.01 V, left standing for 5 min, then discharged at a constant current of 50 μA to 0.01 V, and the discharge capacity under low temperature was recorded.

Low-temperature discharge capacity retention rate (%) = (discharge capacity under low temperature/discharge capacity at the third cycle) × 100%.

(6) Capacity retention rate of half cell after 50 cycles (%):

At 25°C, the assembled half cell was discharged at a constant current of 0.5 C to 0.01 V, left standing for 5 min, then discharged at a constant current of 50 μA to 0.01 V, left standing for 5 min, charged at a constant current of 0.5 C to 2.0 V, and left standing for 5 min, and the discharge capacity at the first cycle was recorded. Then, 50 charge-discharge cycles were performed in the same steps, and the discharge capacity at the 50th cycle was recorded.

Capacity retention rate of half cell after 50 cycles (%) = (discharge capacity at the 50th cycle/discharge capacity at the first cycle) × 100%.

(7) Capacity retention rate of full cell after 100 cycles (%):

At 25°C, the assembled full cell was charged at a constant current of 0.5 C to 3.8 V, then charged at a constant voltage of 3.8 V to 50 μA cutoff, left standing for 5 min, discharged at a constant current of 0.5 C to 2.4 V, and left standing for 5 min, and the discharge capacity at the first cycle was recorded. Then, 100 charge-discharge cycles were performed in the same steps, and the discharge capacity at the 100th cycle was recorded.

Capacity retention rate of full cell after 100 cycles (%) = (discharge capacity at the 100th cycle/discharge capacity at the first cycle) × 100%.

**Example 1**

I. Preparation of silicon-carbon composite material

(1) A resin-based activated carbon with a specific surface area of 1804 $m^2/g$, a pore volume of 0.78 $cm^3/g$, 21% ultramicropores, 22% submicropores, 52% large micropores, and 5% meso-macropores was selected. The resin-based activated carbon was dried and sieved through 400-mesh screen, and 50 g of the treated porous carbon material was placed in a chemical vapor deposition furnace. Under an argon protective atmosphere, the temperature was raised to 450°C. Under a slight positive gas phase pressure (2 kPa), with a mixed gas of monosilane and argon at a volume ratio of 10:90 as a silicon source, reaction was maintained for 10 h at a flow rate of 500 sccm, to obtain a silicon-carbon material with the elemental nanosilicon adsorbed and deposited in the pores of the porous carbon.

(2) In the same vapor deposition furnace, the temperature was lowered to 100°C. Under a slight positive gas phase pressure (1 kPa), oxygen was slowly introduced at a flow rate of 100 sccm. The reaction was maintained for 5 h to perform the micro-oxidation treatment on the nanosilicon on the shallow surface and outer surface of the porous carbon.

(3) In the same vapor deposition furnace, the temperature was raised to 500°C under an argon protective atmosphere. Under a slight positive gas phase pressure (2.5 kPa), with a mixed gas of acetylene and argon at a volume ratio of 50:50 as a carbon source, reaction was maintained for 5 h at a flow rate of 650 sccm, to deposit acetylene-derived carbon on the outer surface of the silicon-carbon material obtained in step (2) and produce a silicon-carbon material coated with a carbon coating layer.

(4) The silicon-carbon material obtained in step (3) was ground and sieved through 400-mesh screen to obtain the final silicon-carbon composite material.

II. Preparation of negative electrode sheet

The silicon-carbon composite material prepared in this application was used as a negative electrode active material, conductive carbon black as a conductive agent, and polyacrylic acid as a binder. The silicon-carbon composite material, conductive carbon black, and polyacrylic acid were fully mixed and stirred at a mass ratio of 7:2:1, added with an appropriate amount of deionized water, and fully stirred and mixed to produce a uniform negative electrode slurry with a certain viscosity. The slurry was then evenly applied on the negative electrode current collector copper foil, which was fully dried at 100°C and punched to obtain the negative electrode sheet.

III. Preparation of positive electrode sheet

$LiFePO_4$ was used as a positive electrode active substance, Super P as a conductive agent, and PVDF as a binder. $LiFePO_4$, Super P, and PVDF were fully mixed and stirred at a mass ratio of 7:2:1, added with an appropriate amount of N-methylpyrrolidone (NMP), and fully stirred and mixed to produce a uniform positive electrode slurry with a certain viscosity. The slurry was then evenly applied on the positive electrode current collector aluminum foil, which was fully dried at 100°C and punched to obtain the positive electrode sheet.

IV. Preparation of electrolyte

In a glove box filled with argon (moisture <10 ppm, oxygen <1 ppm), ethylene carbonate (EC) and dimethyl carbonate (DMC) were well mixed at a volume ratio of 1:1. $LiPF_6$ and fluoroethylene carbonate (FEC) were slowly added to the mixed solution and stirred thoroughly to obtain a non-aqueous electrolyte. Based on the mass of the electrolyte, the mass percentage of $LiPF_6$ was 12.5%, and the mass percentage of FEC was 4.5%.

V. Separator

A Celgard 24000 separator was used as the separator.

VI. Preparation of lithium-ion battery

For the above negative electrode sheet, a lithium sheet and the positive electrode sheet were used as counter electrodes respectively. In the order of the negative electrode sheet, separator, and lithium sheet or positive electrode sheet, the coin-type half cell (with the lithium sheet as the counter electrode) and full cell (with the positive electrode sheet as the positive electrode) were assembled in a glove box.

**Examples 2 to 8**

On the basis of Example 1, except that in "I. Preparation of silicon-carbon composite material", relevant preparation parameters were adjusted according to Table 1, all other steps were the same as in Example 1.

**Comparative Examples 1 to 6**

On the basis of Example 1, except that in "I. Preparation of silicon-carbon composite material", relevant preparation parameters were adjusted according to Table 1, all other steps were the same as in Example 1.

The preparation parameters, powder performance parameters, and electrical performance parameters of each example and comparative example are shown in Table 1, Table 2, and Table 3.

**Table 1: Experimental process parameters for Examples 1 to 8 and Comparative Examples 1 to 6**

| Example and Comparative Example | Porous carbon addition (g) | Monosilane pyrolysis temperature (°C) | Monosilane flow rate (sccm) | Monosilane introduction gas-phase pressure (kPa) | Monosilane introduction duration (h) | Acetylene pyrolysis temperature (°C) | Acetylene flow rate (sccm) | Acetylene introduction gas-phase pressure (kPa) | Acetylene introduction duration (h) |
|---|---|---|---|---|---|---|---|---|---|
| Example 1 | 50 | 450 | 500 | 2.0 | 10 | 500 | 650 | 2.5 | 5 |
| Example 2 | 50 | 450 | 500 | 2.0 | 10 | 500 | 500 | 2.0 | 5 |
| Example 3 | 50 | 450 | 500 | 2.0 | 12 | 500 | 650 | 2.5 | 4 |
| Example 4 | 50 | 450 | 500 | 2.0 | 11 | 500 | 500 | 2.0 | 6 |
| Example 5 | 50 | 450 | 500 | 2.0 | 9 | 550 | 500 | 2.0 | 5 |
| Example 6 | 50 | 450 | 500 | 2.0 | 8 | 500 | 650 | 2.5 | 6 |
| Example 7 | 50 | 450 | 500 | 2.0 | 7.8 | 500 | 500 | 2.5 | 7.8 |
| Example 8 | 50 | 450 | 500 | 2.0 | 10.2 | 500 | 500 | 2.0 | 5.2 |
| Comparative Example 1 | 50 | 500 | 500 | 2.0 | 10 | 550 | 650 | 2.5 | 5 |
| Comparative Example 2 | 50 | 500 | 500 | 2.0 | 10 | 550 | 500 | 2.0 | 6 |
| Comparative Example 3 | 50 | 420 | 500 | 2.0 | 10 | 480 | 650 | 2.5 | 6 |
| Comparative Example 4 | 50 | 420 | 500 | 2.0 | 6 | 480 | 650 | 2.5 | 4 |
| Comparative Example 5 | 50 | 500 | 500 | 2.0 | 10 | 480 | 500 | 2.5 | 6 |
| Comparative Example 6 | 50 | 450 | 500 | 2.0 | 8 | 480 | 500 | 2.5 | 8 |

**Table 2: Powder data for Examples 1 to 8 and Comparative Examples 1 to 6**

| Example and Comparative Example | a (%) | b (%) | a/b | Silicon microcrystal size (nm) | Oxygen element content (%) | $D_v50/D_v99$ (μm) | Specific surface area ($m^2/g$) | Conductivity (S/cm) |
|---|---|---|---|---|---|---|---|---|
| Example 1 | 56.7 | 37.7 | 1.43 | 0.89 | 1.8 | 5.6/15.8 | 6.1 | 3.2 |
| Example 2 | 52.1 | 43.4 | 1.20 | 0.91 | 1.3 | 6.1/18.3 | 4.8 | 2.9 |
| Example 3 | 54.7 | 41.6 | 1.31 | 0.91 | 1.4 | 5.9/17.1 | 5.5 | 3.1 |
| Example 4 | 55.6 | 40.3 | 1.38 | 0.90 | 1.5 | 5.8/16.6 | 5.7 | 3.2 |
| Example 5 | 60.6 | 35.2 | 1.72 | 0.87 | 2.0 | 5.6/15.7 | 7.4 | 3.1 |
| Example 6 | 63.3 | 32.0 | 1.98 | 0.82 | 2.3 | 5.5/15.6 | 7.8 | 3.7 |
| Example 7 | 63.6 | 31.6 | 2.01 | 0.80 | 2.6 | 5.5/15.6 | 7.9 | 3.5 |
| Example 8 | 51.8 | 44.0 | 1.18 | 0.92 | 1.3 | 6.2/18.4 | 4.1 | 2.8 |
| Comparative Example 1 | 45.9 | 50.7 | 0.91 | 0.98 | 1.0 | 7.8/24.7 | 2.6 | 4.6 |
| Comparative Example 2 | 50.0 | 46.6 | 1.07 | 0.95 | 1.1 | 6.8/20.5 | 3.6 | 4.2 |
| Comparative Example 3 | 73.5 | 21.7 | 3.39 | 0.76 | 3.4 | 5.5/15.5 | 8.7 | 1.9 |
| Comparative Example 4 | 79.5 | 13.9 | 5.72 | 0.71 | 4.6 | 5.5/15.5 | 13.8 | 1.4 |
| Comparative Example 5 | 47.6 | 50.2 | 0.95 | 0.97 | 1.2 | 7.8/24.5 | 2.5 | 2.0 |
| Comparative Example 6 | 64.8 | 31.9 | 2.03 | 0.81 | 2.6 | 5.5/15.5 | 8.0 | 1.3 |

**Table 3: Electrochemical performance of half cell and full cell for Example 1 to 8 and Comparative Examples 1 to 6**

| Example and Comparative Example | R value | R' value | R/R' value | First-cycle delithiation specific capacity (mAh/g) | Low-temperature discharge capacity retention rate (%) | Capacity retention rate of half cell after 50 cycles (%) | First-cycle discharge specific capacity of full cell (mAh/g) | Thickness swelling rate of negative electrode sheet after 100 cycles (%) | Capacity retention rate of full cell after 100 cycles (%) |
|---|---|---|---|---|---|---|---|---|---|
| Example 1 | 0.86 | 1.21 | 0.71 | 1635.5 | 82.2 | 90.7 | 140.0 | 22.8 | 91.6 |
| Example 2 | 0.89 | 1.21 | 0.74 | 1879.0 | 83.4 | 88.6 | 141.4 | 29.3 | 84.9 |
| Example 3 | 0.88 | 1.23 | 0.72 | 1799.1 | 80.1 | 89.2 | 140.9 | 26.1 | 88.6 |
| Example 4 | 0.87 | 1.22 | 0.71 | 1745.0 | 78.8 | 89.9 | 140.7 | 24.9 | 90.0 |
| Example 5 | 0.82 | 1.21 | 0.68 | 1545.1 | 79.5 | 91.0 | 136.9 | 21.1 | 92.1 |
| Example 6 | 0.79 | 1.20 | 0.66 | 1475.7 | 78.3 | 91.6 | 132.4 | 20.8 | 92.5 |
| Example 7 | 0.78 | 1.25 | 0.62 | 1493.3 | 66.7 | 91.9 | 131.1 | 20.6 | 92.4 |
| Example 8 | 0.90 | 1.20 | 0.75 | 1892.5 | 77.9 | 88.0 | 141.5 | 29.7 | 83.8 |
| Comparative Example 1 | 0.99 | 1.14 | 0.87 | 2138.6 | 85.4 | 79.9 | 143.7 | 41.6 | 69.5 |

(continued)

| Example and Comparative Example | R value | R' value | R/R' value | First-cycle delithiation specific capacity (mAh/g) | Low-temperature discharge capacity retention rate (%) | Capacity retention rate of half cell after 50 cycles (%) | First-cycle discharge specific capacity of full cell (mAh/g) | Thickness swelling rate of negative electrode sheet after 100 cycles (%) | Capacity retention rate of full cell after 100 cycles (%) |
|---|---|---|---|---|---|---|---|---|---|
| Comparative Example 2 | 0.96 | 1.16 | 0.83 | 1981.8 | 83.3 | 83.2 | 142.3 | 35.7 | 78.4 |
| Comparative Example 3 | 0.71 | 1.26 | 0.56 | 1058.4 | 66.5 | 92.1 | 127.2 | 20.3 | 92.9 |
| Comparative Example 4 | 0.64 | 1.28 | 0.50 | 811.8 | 60.2 | 92.6 | 114.4 | 17.9 | 93.2 |
| Comparative Example 5 | 0.97 | 1.24 | 0.78 | 2116.3 | 68.9 | 80.2 | 143.1 | 39.8 | 71.2 |
| Comparative Example 6 | 0.79 | 1.30 | 0.61 | 1471.0 | 60.0 | 92.1 | 131.7 | 20.6 | 92.6 |

Referring to Table 1, Table 2, and Table 3, it can be seen from the data of the examples and comparative examples that when the R/R' value is too high, as in Comparative Example 1 and Comparative Example 2, where the R/R' values of the silicon-carbon composite materials are 0.87 and 0.83 respectively, although the lithium-ion battery has a high first-cycle delithiation specific capacity and conductivity, the corresponding capacity retention rate (%) and thickness swelling rate (%) are significantly reduced, indicating that the cycling performance and swelling resistance of the silicon-carbon composite material are significantly reduced. When the R/R' value is too low, as in Comparative Example 3 and Comparative Example 4, where the R/R' values of the silicon-carbon composite materials are 0.56 and 0.50 respectively, although the lithium-ion battery has relatively good capacity retention rate (%) after 50 cycles and capacity retention rate (%) after 100 cycles, the corresponding performance such as the specific capacity, conductivity, low-temperature discharge capacity retention rate, first-cycle discharge specific capacity, and thickness swelling rate are significantly reduced.

Further, when the R value of the silicon-carbon composite material is too high, as in Comparative Example 1 and Comparative Example 2, where the R values of the silicon-carbon composite materials are 0.99 and 0.96 respectively, although the lithium-ion battery has a high first-cycle delithiation specific capacity and conductivity, its cycling performance (capacity retention rate) and swelling resistance (thickness swelling rate) are significantly reduced. When the R value is too low, as in Comparative Example 3 and Comparative Example 4, where the R values of the silicon-carbon composite materials are 0.71 and 0.64 respectively, although the lithium-ion battery has relatively good cycling performance (capacity retention rate), its specific capacity, conductivity, low-temperature discharge capacity retention rate, first-cycle discharge specific capacity, thickness swelling rate, and the like are significantly reduced. When the R' value is too high, as in Comparative Example 3 and Comparative Example 4, where the R' values of the silicon-carbon composite material are 1.26 and 1.28 respectively, although the lithium-ion battery has relatively good cycling performance (capacity retention rate), its specific capacity, conductivity, low-temperature discharge capacity retention rate, first-cycle discharge specific capacity, thickness swelling rate, and the like are significantly reduced. When the R' value is too low, as in Comparative Example 1 and Comparative Example 2, where the R' values of the silicon-carbon composite materials are 1.14 and 1.16 respectively, although the lithium-ion battery has a high first-cycle delithiation specific capacity and conductivity, its cycling performance (capacity retention rate) and swelling resistance (thickness swelling rate) are significantly reduced. Moreover, a too low R value or a too high R' value further deteriorates the low-temperature performance (low-temperature discharge capacity retention rate) of the silicon-carbon composite material, as in Comparative Example 3 and Comparative Example 4.

In addition, from Comparative Example 5, it can be seen that when the R' value of the silicon-carbon composite material is 1.24, which is within the range of this application, and the R value is 0.97, which is too high and not within the range of this application, although the lithium-ion battery has a high specific capacity, its conductivity, low-temperature performance, cycling performance, and swelling resistance are reduced. Also, from Comparative Example 6, it can be seen that when the R' value of the silicon-carbon composite material is 1.30, which is too high and not within the range of this application, and the R value is 0.79, which is within the range of this application, although the lithium-ion battery has

good cycling performance and swelling resistance, its conductivity, specific capacity, and low-temperature performance are significantly reduced.

This application, through research, found that controlling the R/R' value of the silicon-carbon composite material, as well as the corresponding R value and R' value within the ranges of this application allows the lithium-ion battery to have improved electrical conductivity, low-temperature performance, cycling performance, and swelling resistance while maintaining a high specific capacity. To be specific, controlling the silicon-carbon composite material to satisfy: an R/R' value in a range of greater than 0.61 and less than 0.78 (such as the R/R' values in the examples: 0.62, 0.66, 0.68, 0.71, 0.72, 0.74, and 0.75), a corresponding R value in a range of greater than 0.78 and less than 0.9 (such as the R values in the examples: 0.78, 0.79, 0.82, 0.86, 0.87, 0.88, 0.89, and 0.90), and a corresponding R' value in a range of greater than or equal to 1.2 and less than or equal to 1.25 (such as the R' values in the examples: 1.20, 1.21, 1.22, 1.23, and 1.25), the silicon-carbon composite material achieves an optimal balance ratio between crystalline silicon and amorphous silicon, and between carbon defects and carbon graphitization, thereby achieving significantly improved electrical conductivity, low-temperature performance, cycling performance, and swelling resistance while maintaining a high specific capacity.

From Examples 1 to 8, it can also be seen that compared to the existing silicon-carbon composite materials or the silicon-carbon composite materials in comparative examples, when the R/R' value of the silicon-carbon composite material and the corresponding R value and R' value are all controlled within the ranges of this application, the obtained silicon-carbon composite material not only has a higher specific capacity but also has better electrical conductivity, low-temperature performance, cycling performance, and swelling resistance, thereby exhibiting more outstanding lithium storage performance. After cycling of the lithium-ion battery, the oxygen element content in the silicon-carbon composite material in the negative electrode sheet also affects the cycling performance of the lithium-ion battery. From Examples 1 to 8, it can be seen that controlling the oxygen element content in the silicon-carbon composite material of the negative electrode sheet after cycling within the range of this application, it is beneficial to further balance the specific capacity, cycling performance, and swelling resistance of the lithium-ion battery, thereby improving the overall performance of the lithium-ion battery. The ratio of carbon material to elemental silicon, $D_v50$, $D_v99$, specific surface area, and the oxygen element content in the silicon-carbon composite material usually also affect the performance of the lithium-ion battery. From Example 1 to Example 8, it can be seen that controlling the content ratio of carbon material to elemental silicon, silicon microcrystal size, oxygen element content, $D_v50$, $D_v99$, specific surface area, and conductivity of the silicon-carbon composite material within the ranges of this application helps to further obtain a lithium-ion battery with excellent specific capacity, low-temperature performance, cycling performance, and swelling resistance.

This application is described through some embodiments, and those skilled in the art know that various changes or equivalent substitutions can be made to these features and embodiments without departing from the spirit and scope of this application. In addition, under the instruction of this application, modifications can be made to these features and embodiments to adapt to specific situations and materials without departing from the spirit and scope of this application. Therefore, this application is not limited by the specific embodiments disclosed herein, and all embodiments falling within the scope of the claims of this application are within the protection scope of this application.

## Claims

1. A silicon-carbon composite material, the silicon-carbon composite material comprising elemental silicon and a carbon material, wherein

   a Raman spectrum characteristic of the silicon-carbon composite material satisfies: $0.61 < R/R' < 0.78$;
   wherein R is a ratio of $I_A$ to $I_B$; R' is a ratio of $I_D$ to $I_G$; $I_A$ represents an intensity of a peak at $521 \pm 5$ cm$^{-1}$ in the Raman spectrum of the silicon-carbon composite material; $I_B$ represents an intensity of a peak at $480 \pm 5$ cm$^{-1}$ in the Raman spectrum of the silicon-carbon composite material; $I_D$ represents an intensity of a peak at $1360 \pm 5$ cm$^{-1}$ in the Raman spectrum of the silicon-carbon composite material; and $I_G$ represents an intensity of a peak at $1580 \pm 5$ cm$^{-1}$ in the Raman spectrum of the silicon-carbon composite material.

2. The silicon-carbon composite material according to claim 1, wherein a range of R in the Raman spectrum characteristic of the silicon-carbon composite material is: $0.78 \leq R \leq 0.9$; and a range of R' in the Raman spectrum characteristic of the silicon-carbon composite material is: $1.2 \leq R' \leq 1.25$.

3. The silicon-carbon composite material according to claim 1 or 2, wherein the elemental silicon comprises at least one of silicon nanoparticles, silicon submicron particles, or a silicon nanofilm; and the carbon material comprises a porous carbon framework and a carbon coating layer.

4. The silicon-carbon composite material according to any one of claims 1 to 3, wherein based on a mass of the silicon-

carbon composite material, a ratio of a content a of carbon element to a content b of silicon element in the silicon-carbon composite material satisfies the range: $0.5 < a/b < 10$; and/or

a content a of carbon element in the silicon-carbon composite material satisfies the range: 40wt% < a < 90wt%, and a content b of silicon element in the silicon-carbon composite material satisfies the range: 10wt% < b < 60wt%; and
preferably, based on the mass of the silicon-carbon composite material, the ratio of the content a of the carbon element to the content b of the silicon element in the silicon-carbon composite material satisfies the range: $1.07 < a/b < 2.03$; and/or
the content a of the carbon element in the silicon-carbon composite material satisfies the range: 50wt% < a < 64.8wt%; and the content b of the silicon element in the silicon-carbon composite material satisfies the range: 31.9wt% < b < 46.6wt%.

5. The silicon-carbon composite material according to any one of claims 1 to 4, wherein in an SEM image of an internal cross-section of the silicon-carbon composite material, internal surfaces of particles are smooth, and pores inside the particles have a pore size of less than 50 nm.

6. The silicon-carbon composite material according to any one of claims 1 to 5, wherein the silicon-carbon composite material satisfies at least one of the following conditions 1) to 5):

1) a size of silicon microcrystals in the silicon-carbon composite material is less than 1 nm; preferably, the size of the silicon microcrystals in the silicon-carbon composite material ranges from 0.8 nm to 0.95 nm;
2) a particle size $D_v50$ of the silicon-carbon composite material ranges from 5 μm to 10 μm, and $D_v99$ ranges from 15 μm to 25 μm; preferably, the particle size $D_v50$ of the silicon-carbon composite material ranges from 5 μm to 6.5 μm, and $D_v99$ ranges from 15 μm to 19 μm;
3) a specific surface area of the silicon-carbon composite material ranges from 1 $m^2/g$ to 50 $m^2/g$; preferably, the specific surface area of the silicon-carbon composite material ranges from 4 $m^2/g$ to 8 $m^2/g$;
4) a content of oxygen element in the silicon-carbon composite material ranges from 1.0wt% to 4.0wt%; preferably, the content of the oxygen element in the silicon-carbon composite material ranges from 1.2wt% to 3wt%; or
5) a first-cycle delithiation specific capacity of the silicon-carbon composite material ranges from 500 mAh/g to 2500 mAh/g; preferably, the first-cycle delithiation specific capacity of the silicon-carbon composite material ranges from 1400 mAh/g to 2000 mAh/g.

7. A method for preparing the silicon-carbon composite material according to any one of claims 1 to 6, wherein the method comprises: adjusting the R value of the silicon-carbon composite material by changing at least one parameter selected from a pyrolysis temperature of a silicon-containing gas, a flow rate of the silicon-containing gas, a duration of introducing the silicon-containing gas, a duration of a micro-oxidation, a temperature of the micro-oxidation, or a flow rate of an introduced oxygen; and/or

adjusting the R' value of the silicon-carbon composite material by changing at least one parameter selected from a pyrolysis temperature of a carbon source gas, a flow rate of the carbon source gas, or a duration of introducing the carbon source gas;
preferably, the method comprises the following steps:

(1) silicon deposition: using a porous carbon material as a precursor and a silicon-containing gas as a silicon source, absorbing and depositing elemental nanosilicon onto pores of a porous carbon through a chemical vapor deposition;
(2) micro-oxidation: introducing oxygen to perform a micro-oxidation on nanosilicon on a shallow surface and an outer surface of the porous carbon; and
(3) carbon deposition: after the micro-oxidation is completed, introducing a carbon source gas to deposit the carbon source gas on an outer surface of a material obtained in step (2) to form a carbon coating layer, thereby obtaining a silicon-carbon material coated with the carbon coating layer;

wherein steps (1) to (3) are all performed under a protective atmosphere of inert gas and a gas phase condition of a slight positive pressure, the slight positive pressure condition ranging from 0.1 kPa to 5 kPa;
preferably, the method further comprises:
(4) grinding and sieving a silicon-carbon composite material obtained in step (3) to obtain the silicon-carbon

composite material;
preferably, in step (1), the slight positive pressure condition ranges from 1.5 kPa to 2.5 kPa; in step (2), the slight positive pressure condition ranges from 0.5 kPa to 1.5 kPa; and in step (3), the slight positive pressure condition ranges from 2.0 kPa to 3.0 kPa.

**8.** An electrochemical apparatus, wherein the electrochemical apparatus comprises a positive electrode sheet, a negative electrode sheet, and an electrolyte; wherein the negative electrode sheet comprises a negative electrode current collector and a negative electrode active substance disposed on at least one surface of the negative electrode current collector; the negative electrode active substance comprises the silicon-carbon composite material according to any one of claims 1 to 6;

preferably, the negative electrode active substance further comprises graphite, a conductive agent, and a binder; and a mass proportion of the graphite in the negative electrode active substance ranges from 35wt% to 95wt%;
preferably, the negative electrode active substance satisfies at least one of the following conditions (I) to (III):

(I) a particle size $D_v50$ ranges from 5 μm to 15 μm, and $D_v99$ ranges from 15 μm to 40 μm;
(II) a specific surface area of the negative electrode active substance ranges from 1 $m^2/g$ to 10 $m^2/g$; or
(III) a first-cycle delithiation specific capacity of the negative electrode active substance ranges from 400 mAh/g to 1000 mAh/g.

**9.** An electronic apparatus, comprising the electrochemical apparatus according to claim 8.

Intensity (a.u.)
0 10 20 30 40 50 60 70 80 90
2θ (°)

FIG. 1

1360±5
1580±5
480±5
521±5
Intensity (a.u.)
400
800
1200
1600
2000
Raman shift (cm-1)

FIG. 2

10 μm

FIG. 3

3.0
2.5
2.0
1.5
1.0
0.5
0.0
Voltage (V)
0
500
1000
1500
2000
Specific capacity (mAh/g)

FIG. 4

**INTERNATIONAL SEARCH REPORT**

International application No.
**PCT/CN2024/122343**

**A. CLASSIFICATION OF SUBJECT MATTER**

H01M4/36(2006.01)i；H01M4/38(2006.01)i；H01M4/587(2010.01)i；H01M4/04(2006.01)i；H01M4/134(2010.01)i；H01M4/133(2010.01)i；H01M10/0525(2010.01)i

According to International Patent Classification (IPC) or to both national classification and IPC

**B. FIELDS SEARCHED**

Minimum documentation searched (classification system followed by classification symbols)

IPC：H01M4、H01M10

Documentation searched other than minimum documentation to the extent that such documents are included in the fields searched

Electronic data base consulted during the international search (name of data base and, where practicable, search terms used)

CNTXT, ENTXTC, DWPI, CNKI, ISI_Web of Science, CAPLUS(STN): 硅碳复合材料, 硅, 碳, 负极材料, 负极极片, 拉曼, 强度, 峰, 比值, 比, 二次电池, 结晶, 非晶, Silicon-carbon composite, Si, Silicon, Carbon, "C", raman, peak, intensity, ratio, secondary battery, anode materials

**C. DOCUMENTS CONSIDERED TO BE RELEVANT**

| Category* | Citation of document, with indication, where appropriate, of the relevant passages | Relevant to claim No. |
|---|---|---|
| PX | CN 118136791 A (NINGDE AMPEREX TECHNOLOGY LTD.) 04 June 2024 (2024-06-04) claims 1-10 | 1-9 |
| A | CN 114051663 A (NINGDE AMPEREX TECHNOLOGY LTD.) 15 February 2022 (2022-02-15) description, paragraphs 4-22 and 41-43 | 1-9 |
| A | CN 116435493 A (BEIJING IAMETAL NEW ENERGY CO., LTD. et al.) 14 July 2023 (2023-07-14) entire document | 1-9 |
| A | JP 2022121582 A (SHIN-ETSU CHEMICAL CO., LTD.) 19 August 2022 (2022-08-19) entire document | 1-9 |
| A | US 2015214548 A1 (JNC CORP. et al.) 30 July 2015 (2015-07-30) entire document | 1-9 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **07 January 2025** | **16 January 2025** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**

International application No.
**PCT/CN2024/122343**

**C. DOCUMENTS CONSIDERED TO BE RELEVANT**

| Category* | Citation of document, with indication, where appropriate, of the relevant passages | Relevant to claim No. |
|---|---|---|
| A | US 2018072575 A1 (IMERYS GRAPHITE & CARBON SWITZERLAND LTD. et al.) 15 March 2018 (2018-03-15)<br>entire document | 1-9 |
| A | US 2022131154 A1 (TIANMULAKE EXCELLENT ANODE MATERIALS CO., LTD.) 28 April 2022 (2022-04-28)<br>entire document | 1-9 |
| A | US 2022320505 A1 (BTR NEW MATERIAL GROUP CO., LTD. et al.) 06 October 2022 (2022-10-06)<br>entire document | 1-9 |
| A | US 2023207780 A1 (SHOWA DENKO K.K.) 29 June 2023 (2023-06-29)<br>entire document | 1-9 |
| A | WO 2022249476 A1 (SHOWA DENKO K.K.) 01 December 2022 (2022-12-01)<br>entire document | 1-9 |

Form PCT/ISA/210 (second sheet) (July 2022)

**INTERNATIONAL SEARCH REPORT**
**Information on patent family members**

International application No.
**PCT/CN2024/122343**

| Patent document cited in search report | | | Publication date (day/month/year) | Patent family member(s) | | | Publication date (day/month/year) |
|---|---|---|---|---|---|---|---|
| CN | 118136791 | A | 04 June 2024 | None | | | |
| CN | 114051663 | A | 15 February 2022 | None | | | |
| CN | 116435493 | A | 14 July 2023 | None | | | |
| JP | 2022121582 | A | 19 August 2022 | JP | 7285991 | B2 | 02 June 2023 |
| US | 2015214548 | A1 | 30 July 2015 | JPWO | 2014002602 | A1 | 30 May 2016 |
| | | | | JP | 6183362 | B2 | 23 August 2017 |
| | | | | EP | 2869367 | A1 | 06 May 2015 |
| | | | | EP | 2869367 | A4 | 24 February 2016 |
| | | | | KR | 20150027236 | A | 11 March 2015 |
| | | | | KR | 102075639 | B1 | 10 February 2020 |
| | | | | TW | 201403929 | A | 16 January 2014 |
| | | | | TWI | 584518 | B | 21 May 2017 |
| | | | | WO | 2014002602 | A1 | 03 January 2014 |
| US | 2018072575 | A1 | 15 March 2018 | KR | 20170122230 | A | 03 November 2017 |
| | | | | BR | 112017018333 | A2 | 17 April 2018 |
| | | | | JP | 2018512355 | A | 17 May 2018 |
| | | | | EP | 3261989 | A1 | 03 January 2018 |
| | | | | WO | 2016135328 | A1 | 01 September 2016 |
| | | | | CA | 2977295 | A1 | 01 September 2016 |
| | | | | MX | 2017010952 | A | 06 June 2018 |
| US | 2022131154 | A1 | 28 April 2022 | JP | 2021535562 | A | 16 December 2021 |
| | | | | JP | 7372690 | B2 | 01 November 2023 |
| | | | | US | 12095093 | B2 | 17 September 2024 |
| | | | | KR | 20210032512 | A | 24 March 2021 |
| | | | | KR | 102629191 | B1 | 25 January 2024 |
| | | | | WO | 2020042577 | A1 | 05 March 2020 |
| | | | | EP | 3846249 | A1 | 07 July 2021 |
| | | | | EP | 3846249 | A4 | 08 June 2022 |
| US | 2022320505 | A1 | 06 October 2022 | JP | 2022533857 | A | 26 July 2022 |
| | | | | JP | 7317145 | B2 | 28 July 2023 |
| | | | | KR | 20210129691 | A | 28 October 2021 |
| | | | | KR | 102728716 | B1 | 08 November 2024 |
| | | | | EP | 3965192 | A1 | 09 March 2022 |
| | | | | EP | 3965192 | A4 | 12 October 2022 |
| | | | | WO | 2021057923 | A1 | 01 April 2021 |
| US | 2023207780 | A1 | 29 June 2023 | US | 12155065 | B2 | 26 November 2024 |
| | | | | JPWO | 2021241748 | A1 | 02 December 2021 |
| | | | | JP | 7472972 | B2 | 23 April 2024 |
| | | | | WO | 2021241748 | A1 | 02 December 2021 |
| | | | | WO | 2021241747 | A1 | 02 December 2021 |
| | | | | EP | 4160728 | A1 | 05 April 2023 |
| | | | | EP | 4160728 | A4 | 16 October 2024 |
| | | | | KR | 20230016213 | A | 01 February 2023 |
| | | | | EP | 4160727 | A1 | 05 April 2023 |
| | | | | EP | 4160727 | A4 | 09 October 2024 |
| | | | | JPWO | 2021241747 | A1 | 02 December 2021 |
| | | | | JP | 7501623 | B2 | 18 June 2024 |
| | | | | US | 2023231111 | A1 | 20 July 2023 |
| | | | | US | 12148919 | B2 | 19 November 2024 |

Form PCT/ISA/210 (patent family annex) (July 2022)

**INTERNATIONAL SEARCH REPORT**
**Information on patent family members**

International application No.
**PCT/CN2024/122343**

| Patent document cited in search report | Publication date (day/month/year) | Patent family member(s) | Publication date (day/month/year) |
|---|---|---|---|
| | | KR 20230015992 A | 31 January 2023 |
| WO 2022249476 A1 | 01 December 2022 | JPWO 2022249476 A1 | 01 December 2022 |

Form PCT/ISA/210 (patent family annex) (July 2022)